(19) Europäisches Patentamt / European Patent Office / Office européen des brevets

(11) **EP 4 726 793 A1**

(12) **EUROPEAN PATENT APPLICATION**


(43) Date of publication:
**15.04.2026 Bulletin 2026/16**

(21) Application number: **25206752.5**

(22) Date of filing: **06.10.2025**

(51) International Patent Classification (IPC):
***H01M 4/04*** (2006.01) ***H01M 4/133*** (2010.01)
***H01M 4/1393*** (2010.01) ***H01M 4/1395*** (2010.01)
***H01M 4/38*** (2006.01) ***H01M 4/587*** (2010.01)
***H01M 4/62*** (2006.01) ***H01M 10/0562*** (2010.01)

(52) Cooperative Patent Classification (CPC):
**H01M 4/0404; H01M 4/133; H01M 4/1393; H01M 4/1395; H01M 4/38; H01M 4/587; H01M 4/622; H01M 10/0562;** H01M 2004/027; H01M 2300/0068

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.10.2024 KR 20240136556**



(71) Applicant: **SAMSUNG SDI CO., LTD.**
**Yongin-si, Gyeonggi-do 17084 (KR)**

(72) Inventors:
- **HAN, Jiwon**
  **17084 Gyeonggi-do (KR)**
- **OH, Seunghyun**
  **17084 Gyeonggi-do (KR)**
- **LEE, Jangwook**
  **17084 Gyeonggi-do (KR)**
- **LEE, Bohyung**
  **17084 Gyeonggi-do (KR)**

(74) Representative: **Michalski Hüttermann & Partner Patentanwälte mbB**
**Kaistraße 16A**
**40221 Düsseldorf (DE)**


(54) **METHOD OF MANUFACTURING NEGATIVE ELECTRODE SLURRY FOR ALL-SOLID-STATE BATTERY, NEGATIVE ELECTRODE FOR ALL-SOLID-STATE BATTERY PRODUCED BY THE SAME, AND ALL-SOLID-STATE BATTERY INCLUDING THE SAME**


(57) Disclosed are methods of manufacturing negative electrode slurry for all-solid-state batteries, negative electrodes manufactured by the methods, and all-solid-state batteries including the negative electrodes. The method of manufacturing a negative electrode slurry includes preparing a first mixture by mixing a negative electrode material with a binder solution that includes a solvent and a first binder, producing a dispersion by performing an ultrasonic dispersion treatment on the first mixture, and preparing a second mixture by adding a second binder to the dispersion.


FIG. 1

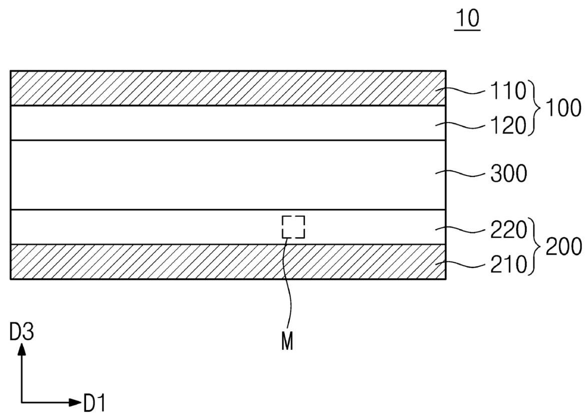


EP 4 726 793 A1

## Description

CROSS-REFERENCE TO RELATED APPLICATION

This application claims priority under 35 U.S.C § 119 to Korean Patent Application No. 10-2024-0136556 filed on October 8, 2024 in the Korean Intellectual Property Office, the disclosure of which is hereby incorporated by reference in its entirety.

BACKGROUND

Examples of the present disclosure relate to a method of manufacturing a negative electrode slurry for an all-solid-state battery, a negative electrode for an all-solid-state battery produced by the negative electrode slurry, and an all-solid-state battery including the negative electrode.

There is active development of high-energy density and safe batteries driven by industrial demands. For example, lithium ion batteries are commercialized not only in formation-related and communication devices, but also in the automotive industry. In the automotive industry, safety is particularly emphasized due to the direct relation thereof to human safety.

There are all-solid-state batteries that use a solid electrolyte in place of a liquid electrolyte. As an all-solid-state battery typically does not use a flammable organic dispersion medium, the possibility of fire or explosion may be significantly reduced even in the event of short-circuit. Accordingly, an all-solid-state battery may significantly increase safety as compared to a lithium ion battery using a liquid electrolyte.

SUMMARY

An example embodiment of the present disclosure provides a method of manufacturing a negative electrode slurry with improved dispersion characteristics.

An example embodiment of the present disclosure provides a high-performance negative electrode for an all-solid-state battery, and an all-solid-state battery including the negative electrode.

According to an example embodiment of the present disclosure, a method of manufacturing a negative electrode slurry for an all-solid-state battery may include preparing a first mixture by mixing a negative electrode material with a binder solution that includes a solvent and a first binder; producing a dispersion by performing an ultrasonic dispersion treatment on the first mixture; and preparing a second mixture by adding a second binder to the dispersion.

According to an example embodiment of the present disclosure, a negative electrode for an all-solid-state battery may include a negative electrode current collector; and a negative electrode coating layer. The negative electrode coating layer may be prepared by coating on the negative electrode current collector a negative electrode slurry manufactured by the aforementioned method.

According to an example embodiment of the present disclosure, an all-solid-state battery may include the negative electrode discussed above.

BRIEF DESCRIPTION OF DRAWINGS

FIG. 1 illustrates a cross-sectional view showing an all-solid-state battery according to an example embodiment of the present disclosure.

FIG. 2 illustrates a cross-sectional view showing an all-solid-state battery according to an example embodiment of the present disclosure.

FIGS. 3 and 4 illustrate respective plan and cross-sectional views showing an all-solid-state battery according to an example embodiment of the present disclosure.

FIG. 5 illustrates a cross-sectional view showing an all-solid-state battery according to an example embodiment of the present disclosure.

FIG. 6 illustrates a cross-sectional view showing an all-solid-state battery including a gasket structure according to an example embodiment of the present disclosure.

FIG. 7 illustrates an enlarged view showing a negative electrode coating layer according to an example embodiment of the present disclosure.

FIG. 8 illustrates a flow chart showing a method of manufacturing a negative electrode slurry according to an example embodiment of the present disclosure.

FIGS. 9 to 11 illustrate schematic diagrams showing a method of manufacturing a negative electrode slurry according to an example embodiment of the present disclosure.

FIG. 12A illustrates SEM analysis results of a negative electrode slurry according to an example embodiment of the present disclosure.

FIG. 12B illustrates SEM analysis results of a negative electrode slurry according to a comparative example.

FIG. 13 illustrates a graph showing measurement results of shear viscosity of slurry according to an example embodiment and a comparative example.

DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be directly on the other element, or intervening elements may be present therebetween. In the drawings, thicknesses of some components are exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions are exaggerated for effectively explaining the technical contents. Accordingly, regions illustrated in the drawings as examples have general properties, and shapes of regions illustrated in the drawings as examples are used to disclose specific shapes but are not limited to the scope of the present disclosure. It is understood that although the terms "first", "second", "third," and the like, may be used herein to describe various elements, these elements should not be limited by these terms. These terms are only used to distinguish one element from another element. The example embodiments explained and illustrated herein include complementary embodiments thereof.

The terms in this description are merely used to describe various example embodiments, but are not intended to limit the present disclosure. Unless otherwise specially noted in this description, the expression of a singular form may include the expression of a plural form. The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter ($D_{50}$) where a cumulative volume is about 50 volume % in a particle size distribution. The average particle diameter ($D_{50}$) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter ($D_{50}$) value may be obtained through a calculation. For example, a laser scattering method may be utilized to measure the average particle diameter ($D_{50}$). In the laser scattering method, a target particle is dispersed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.

The negative electrode (200) according to the invention is preferably a negative electrode layer (200).

FIG. 1 illustrates a cross-sectional view showing an all-solid-state battery 10 according to an example embodiment of the present disclosure.

Referring to FIG. 1, the all-solid-state battery 10 may include a positive electrode layer 100, a negative electrode layer 200 opposite to the positive electrode layer 100, and a solid electrolyte layer 300 disposed between the positive electrode layer 100 and the negative electrode layer 200. The present disclosure, however, is not limited thereto, and the all-solid-state battery 10 may further include an additional functional layer, such as, e.g., an adhesion enhancement layer, disposed between the positive electrode layer 100 and the solid electrolyte layer 300, or between the negative electrode layer 200 and the solid electrolyte layer 300.

The positive electrode layer 100 according to an example embodiment may include a positive electrode current collector 110 and a positive electrode active material layer 120 disposed on the positive electrode current collector 110. The positive electrode active material layer 120 may include a positive electrode active material, a solid electrolyte, a conductive material, and a binder.

The positive electrode current collector 110 may provide a reference surface on which the positive electrode active material layer 120 is disposed. The positive electrode current collector 110 may include a plate or foil including, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

In another embodiment of the present disclosure, the positive electrode current collector 110 may be omitted. Although not shown, in order to increase adhesion between the positive electrode current collector 110 and the positive electrode active material layer 120, a carbon layer having a thickness in a range of ≥ 0.1 μm to ≤ 4 μm may further be disposed between the positive electrode current collector 110 and the positive electrode active material layer 120.

**The** positive electrode active material may be or include a material that can reversibly absorb and desorb lithium ions. For example, the positive electrode active material may include at least one of a lithium transition metal oxide (e.g., at least one of lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), a nickel sulfide, a copper sulfide, a lithium sulfide, an iron oxide, or a vanadium oxide, but the present disclosure is not limited thereto. The positive electrode active material may be included alone or in a mixture of two or more of the above compounds.

The lithium transition metal oxide may be or include, for example, a compound represented by one of $Li_aA_{1-b}B_bD_2$ (where $0.90 \leq a \leq 1$ and $0 \leq b \leq 0.5$), $Li_aE_{1-b}B_bO_{2-c}D_c$ (where $0.90 \leq a \leq 1$, $0 \leq b \leq 0.5$, and $0 \leq c \leq 0.05$), $LiE_{2-b}B_bO_{4-c}D_c$ (where $0 \leq b \leq 0.5$ and $0 \leq c \leq 0.05$), $Li_aNi_{1-b-c}Co_bB_cD_\alpha$ (where $0.90 \leq a \leq 1$, $0 \leq b \leq 0.5$, $0 \leq c \leq 0.05$, and $0<\alpha<2$), $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, and $0<\alpha<2$), $Li_aNi_{1-b-c}Mn_bB_cD_\alpha$ (where $0.90 \leq a \leq 1$, $0 \leq b \leq 0.5$, $0 \leq c \leq 0.05$, and $0< \alpha \leq 2$), $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$, and $0<\alpha<2$), $Li_aNi_bE_cG_dO_2$ (where $0.90 \leq a \leq 1$, $0 \leq b \leq 0.9$, $0 \leq c \leq 0.5$, and $0.001 \leq d \leq 0.1$), $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$), $Li_aNiG_bO_2$ (where $0.9 \leq a \leq 1$ and $0.001 \leq b \leq 0.1$), $Li_aCoG_bO_2$ (where $0.90 \leq a \leq 1$ and $0.001 \leq b \leq 0.1$), $Li_aMnG_bO_2$ (where $0.90 \leq a \leq 1$ and $0.001 \leq b \leq 0.1$), $Li_aMn_2G_bO_4$ (where $0.90 \leq a \leq 1$ and $0.001 \leq b \leq 0.1$), $QO_2$, $QS_2$, $LiQS_2$, $V_2O_5$, $LiV_2O_5$, $LiIO_2$, $LiNiVO_4$, $Li_{3-f}J_2(PO_4)_3$ (where $0 \leq f \leq 2$), $Li_{3-f}Fe_2(PO_4)_3$ (where $0 \leq f \leq 2$), and $LiFePO_4$. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material may include, for example, a lithium salt of a transition metal oxide having a layered rock salt type structure among the lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs), each formed of or including cations and anions, are arranged displaced from each other by 1/2 of a ridge of a unit lattice. The lithium transition metal oxide having the layered rock salt type structure may be or include a ternary lithium transition metal oxide, such as $LiNi_xCo_yAl_zO_2$ (NCA) or $LiNi_xCo_yMn_zO_2$ (NCM) (where $0<x<1, 0<y<1$, $0<z<1$, and $x+y+z=1$). When the positive electrode active material includes a ternary lithium transition metal oxide having the layered rock salt type structure, the all-solid-state battery 10 may have increased energy density and improved thermal stability.

The compound included in the positive electrode active material may be covered with a coating layer (not shown). The positive electrode active material may be included in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound forming the coating layer may be or include amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, $Li_2O$-$ZrO_2$ (LZO). A method for forming the coating layer may be or include any methods that do not adversely affect physical characteristics of the positive electrode active material. The method of forming the coating layer may include, for example, spray coating or immersion.

When the positive electrode active material includes nickel (Ni) as a ternary lithium transition metal oxide such as, e.g., NCA or NCM, a capacity density of the all-solid-state battery 10 may increase to reduce metal elution from the positive electrode active material in a charged state. Therefore, the all-solid-state battery 10 may improve in cycle characteristics in a charged state. The language "cycle characteristics" may refer to properties that indicate the degree to which the all-solid-state battery 10 is degraded due to charge and discharge. For example, the all-solid-state battery 10 with high cycle characteristics may degrade less due to charge and discharge, while the all-solid-state battery 10 with low cycle characteristics may degrade more due to charge and discharge.

The positive electrode active material may have, for example, a substantially spherical or substantially oval particulate shape. There is no particular limitation on a particle diameter and an amount of the positive electrode active material.

The solid electrolyte may have a particulate shape. The solid electrolyte may be dispersed between the positive electrode active materials. The solid electrolyte may include a sulfide-based solid electrolyte with desired or improved lithium ionic conductivity. The sulfide-based solid electrolyte may include, for example, at least one of $Li_2S$-$P_2S_5$, $Li_2S$-$P_2S_5$-LiX (where X is a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are each a positive integer, and "Z" is or includes at least one of Ge, Zn, and Ga), $Li_2S$-$GeS_2$, $Li_2S$-$SiS_2$-$Li_3PO_4$, $Li_2S$-$SiS_2$-$Li_pMO_q$ (where p and q are each a positive integer, and "M" is or includes at least one of P, Si, Ge, B, Al, Ga, and In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_3Br$, and $Li_6PS_5I$.

Alternatively, the sulfide-based solid electrolyte may be or include an argyrodite-type compound including $Li_{7-a-c}M_aPS_{6-c}X_c$ (where $0 \leq a \leq 2$ and $0 \leq c \leq 2$). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

Alternatively, the solid electrolyte may be the same as the solid electrolyte included in the solid electrolyte layer 300 which is discussed below.

The argyrodite-type solid electrolyte may have a density in a range of ≥ 1.5 g/cc to ≤ 2.0 g/cc. As the argyrodite-type solid electrolyte has a density that is equal to or greater than about 1.5 g/cc, it may be possible to decrease an internal resistance of an all-solid-state battery and to reduce or prevent a solid electrolyte layer from short-circuit and penetration caused by the formation of lithium dendrites. The solid electrolyte may have an elastic modulus in a range of, for example, about 15 GPa to ≤ 35 GPa.

The solid electrolyte included in the positive electrode active material layer 120 may have a medium-sized average particle diameter ($D_{50}$) that is less than the average particle diameter of a solid electrolyte included in the solid electrolyte layer 300. For example, the medium-sized average particle diameter ($D_{50}$) of the solid electrolyte in the positive electrode active material layer 120 may be about equal to or less than about 90%, 80%, 70%, 60%, 50%, 40%, 30%, or 20% of the medium-sized average particle diameter ($D_{50}$) of a solid electrolyte included in the solid electrolyte layer 300. The average particle diameter ($D_{50}$) may be a median diameter measured with a laser-type particle size distribution analyzer.

The positive electrode active material layer 120 may include a conductive material. The conductive material may have conductivity without causing a substantial chemical change of the all-solid-state battery 10 to increase conductivity of the positive electrode active material and the solid electrolyte.

The conductive material may include a carbon-based material. The conductive material may include, for example, one or more of graphite, carbon black, acetylene black, carbon nano-fiber, and carbon nano-tube.

The positive electrode active material layer 120 may include a binder. The binder may include a material that adheres together the positive electrode active material, the solid electrolyte, and the conductive material included in the positive electrode active material layer 120, and that improves adhesion between the positive electrode active material layer 120 and the positive electrode current collector 110. For example, the binder may include at least one of polyvinylidenefluoride, styrene-butadiene rubber (SBR), polytetrafluoroethylene, vinylidenefluoride/hexafluoropropylene copolymer, polyacrylonitrile, or polymethyl methacrylate.

Based on the total 100 parts by weight of the positive electrode active material, the solid electrolyte, the conductive material, and the binder, the positive electrode active material may be included in an amount in a range of ≥ 85 parts by weight to ≤ 92 parts by weight in the positive electrode active material layer 120. Based on the total 100 parts by weight of the positive electrode active material, the solid electrolyte, the conductive material, and the binder, the binder may be included in an amount in a range of ≥ 0.5 parts by weight to ≤ 1.5 parts by weight in the positive electrode active material layer 120.

Based on 100 parts by weight of the solid electrolyte, the conductive material may be included in an amount in a range of ≥ 1 part by weight to ≤ 50 parts by weight in the positive electrode active material layer 120. When the conductive material is included in an amount that is less than about 1 part by weight relative to 100 parts by weight of the solid electrolyte, a proportion of the conductive material may decrease to reduce electrical conductivity of the positive electrode active material layer 120. When the conductive material is included in an amount that is greater than about 50 parts by weight relative to 100 parts by weight of the solid electrolyte, a proportion of the conductive material may substantially increase to cause incomplete formation of a coating layer that covers a surface of the solid electrolyte.

The positive electrode active material layer 120 may further include an additive, such as, e.g., at least one of a filler, a coating agent, a dispersant, and an ionic conductivity agent, in addition to the positive electrode active material, the solid electrolyte, the conductive material, and the binder.

Referring still to FIG. 1, the negative electrode layer 200 may include a negative electrode current collector 210, and a negative electrode coating layer 220 on the negative electrode current collector 210. The negative electrode coating layer 220 may include a negative electrode material and a binder.

The negative electrode current collector 210 may provide a reference surface on which the negative electrode coating layer 220 is disposed. The negative electrode current collector 210 may include a material that does not react with lithium, for example, a material that does not form an alloy or a compound with lithium. The material included in the negative electrode current collector 210 may include, for example, at least one of copper (Cu), stainless steel, titanium (Ti), iron (Fe), cobalt (Co), or nickel (Ni), but the present disclosure is not limited thereto, and any material may be applicable as long as the material is typically included, or can be included, as an electrode current collector. The negative electrode current collector 210 may have a thickness in a range of ≥ 1 μm to ≤ 20 μm, for example, about 5 μm to ≤ 15 μm, or about 7 μm to ≤ 10 μm.

The negative electrode current collector 210 may be formed of or include one of the metals mentioned above, an alloy of two or more of the metals mentioned above, or a coating material. The negative electrode current collector 210 may have, for example, a plate or foil shape. In an example embodiment, the negative electrode current collector 210 may be omitted.

Although not shown, a carbon layer may further be included to increase adhesion between the negative electrode coating layer 220 and the solid electrolyte layer 300.

The negative electrode coating layer 220 is further discussed in detail with reference to FIG. 7.

Referring again to FIG. 1, the solid electrolyte layer 300 may be disposed between the positive electrode layer 100 and the negative electrode layer 200, and may include a sulfide-based solid electrolyte with desired or improved lithium ionic conductivity. The solid electrolyte included in the solid electrolyte layer 300 may include a material that is substantially the same as, or different from, the material of the solid electrolyte included in the positive electrode active material layer 120.

The solid electrolyte layer 300 according to an example embodiment may include a sulfide-based solid electrolyte. The sulfide-based solid electrolyte may be prepared by performing, for example, a melt quenching method or a mechanically milling method on a starting raw material such as, e.g., $Li_2S$ or $P_2S_5$. In examples, the resulting product of the melt quenching method may be thermally treated after the treatment mentioned above. The solid electrolyte may be in an amorphous state, a crystalline state, or a mixed state of amorphous and crystalline states. The solid electrolyte may include at least one of sulfur (S), phosphorus (P), and lithium (Li) among component elements included in the sulfide-based solid electrolyte mentioned above. For example, the solid electrolyte may be a material including $Li_2S$-$P_2S_5$. When a material including $Li_2S$-$P_2S_5$ is utilized as a sulfide-based solid electrolyte material of the solid electrolyte, a mixing molar ratio of $Li_2S$ and $P_2S_5$ may be in a range of about 50:50 to about 90:10.

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_3Br$, and $Li_6PS_5I$.

Alternatively, the sulfide-based solid electrolyte may be or include an argyrodite-type compound including $Li_{7-a-c}M_aPS_{6-c}X_c$ (where $0 \leq a \leq 2$ and $0 \leq c \leq 2$). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density in a range of ≥ 1.5 g/cc to ≤ 2.0 g/cc. As the argyrodite-type solid electrolyte has a density that is equal to or greater than about 1.5 g/cc, it may be possible to decrease an internal resistance of an all-solid-state battery and to reduce or prevent a solid electrolyte layer from short-circuit and penetration caused by the formation of lithium dendrites. The solid electrolyte may have an elastic modulus in a range of, for example, about 15 GPa to ≤ 35 GPa.

The solid electrolyte layer 300 may further include a binder. The binder included in the solid electrolyte layer 300 may include, for example, at least one of styrene-butadiene rubber (SBR), polytetrafluoroethylene, polyvinylidenefluoride, or polyethylene, but the present disclosure is not limited thereto. The binder of the solid electrolyte layer 300 may be substantially the same as, or different from, the binder of the positive electrode active material layer 120, or the binder of the negative electrode coating layer 220.

FIG. 2 illustrates a cross-sectional view showing an all-solid-state battery 10 according to an example embodiment of the present disclosure.

Referring to FIG. 2, the solid electrolyte layer 300 may include a first solid electrolyte layer 310 and a second solid electrolyte layer 320. The first solid electrolyte layer 310 may be adjacent to the positive electrode layer 100, and the second solid electrolyte layer 320 may be adjacent to the negative electrode layer 200.

The first solid electrolyte layer 310 and the second solid electrolyte layer 320 may have thicknesses that are different from each other. The first solid electrolyte layer 310 may have a first thickness TK1, and the second solid electrolyte layer 320 may have a second thickness TK2. The first thickness TK1 may be greater than the second thickness TK2. For example, the first thickness TK1 may be about two to one hundred times the second thickness TK2.

FIG. 3 illustrates a plan view showing an all-solid-state battery 10 according to an example embodiment of the present disclosure. FIG. 4 illustrates a cross-sectional view taken along line A-A' of FIG. 3. In the example embodiment that follows, a detailed description of technical features repetitive to the features discussed above with reference to FIGS. 1 and 2 is omitted, and a difference thereof is discussed in detail.

Referring to FIGS. 3 and 4, an area of the positive electrode layer 100 and an area of the negative electrode layer 200 may be different from each other. For example, the area of the negative electrode layer 200 may be greater than the area of the positive electrode layer 100. The positive electrode layer 100 may completely inwardly overlap the negative electrode layer 200. The positive electrode layer 100 may be substantially completely encompassed by the negative electrode layer 200.

In an example embodiment of the present disclosure, the first solid electrolyte layer 310 may have substantially the same area as the area of the positive electrode layer 100. The second solid electrolyte layer 320 may have substantially the same area as the area of the negative electrode layer 200.

For example, the first solid electrolyte layer 310 may have a first width WI1 in a first direction D1. The second solid electrolyte layer 320 may have a second width WI2 in the first direction D1. The first width WI1 may be less than the second width WI2. The first solid electrolyte layer 310 may have a third width WI3 in a second direction D2. The second solid electrolyte layer 320 may have a fourth width WI4 in the second direction D2. The third width WI3 may be less than the fourth width WI4.

The all-solid-state battery 10 according to an example embodiment may be fabricated by forming a first stack of the positive electrode layer 100 and the first solid electrolyte layer 310, forming a second stack of the negative electrode layer 200 and the second solid electrolyte layer 320, and then laminating the first stack and the second stack together.

FIG. 5 illustrates a cross-sectional view taken along line A-A' of FIG. 3, showing an all-solid-state battery according to an example embodiment of the present disclosure.

Referring to FIG. 5, the negative electrode layer 200 of the all-solid-state battery 10 may further include a lithium metal layer 400 between the negative electrode current collector 210 and the negative electrode coating layer 220. The lithium metal layer 400 may have an increased thickness when the all-solid-state battery 10 is charged. The negative electrode coating layer 220 may be configured as a protection layer for the lithium metal layer 400 and simultaneously or contemporaneously may reduce or suppress growth of lithium dendrites from the lithium metal layer 400.

The lithium metal layer 400 may be or include a metal thin layer including lithium or lithium alloy. The lithium alloy may be or include, for example, at least one of Li-Al alloy, Li-Sn alloy, Li-In alloy, Li-Ag alloy, Li-Au alloy, Li-Zn alloy, Li-Ge alloy, or Li-Si alloy, but any suitable lithium alloys may be included. The lithium metal layer 400 may include lithium, or one of the alloys mentioned above. In other examples, the lithium metal layer 400 may include various types of alloy.

The lithium metal layer 400 may have a fifth width WI5 in the first direction D1. The fifth width WI5 may be the same as, or greater than, the first width WI1. The fifth width WI5 may be the same as, or less than, the second width WI2. For example, the fifth width WI5 may be greater than the first width WI1 and less than the second width WI2.

FIG. 6 illustrates a cross-sectional view showing an all-solid-state battery 10 according to an example embodiment of the present disclosure.

Referring to FIG. 6, the all-solid-state battery 10 may include a gasket structure 500. A difference in area between the first stack and the second stack may produce a step difference on a lateral surface of the all-solid-state battery 10, and the gasket structure 500 may substantially fill the step difference.

The gasket structure 500 may surround lateral surfaces in the first and second directions D1 and D2 of the first stack of the all-solid-state battery 10 (see FIG. 3). For example, a thickness of the gasket structure 500 may be substantially the same as the thickness of the first stack. Thus, even when the first stack and the second stack having different areas are stacked and pressed together, the all-solid-state battery 10 may be substantially prevented from damage to the step difference on the lateral surface. The expression "substantially the same thickness" may be defined to refer to a thickness that is sufficient enough to reduce or prevent damage to the step difference on the lateral surface of the all-solid-state battery 10 even when the first stack and the second stack having different areas are stacked and pressed together.

Negative Electrode Coating Layer

FIG. 7 illustrates an enlarged cross-sectional view partially showing the negative electrode coating layer (see 220 of FIG. 1) according to an example embodiment of the present disclosure. FIG. 7 shows an enlarged view of section "M" depicted in FIG. 1.

Referring to FIG. 7, the negative electrode coating layer 220 may include a carbon material CRB, a metal MET, a first binder BND1, and a second binder BND2. The negative electrode coating layer 220 may be manufactured by coating, on the negative electrode current collector 210, a negative electrode slurry which is discussed below.

The negative electrode coating layer 220 may induce growth of lithium metal between the negative electrode coating layer 220 and the negative electrode current collector 210 when the all-solid-state battery 10 is charged. The negative electrode coating layer 220 may be configured as a protection layer for lithium metal, and simultaneously or contemporaneously may reduce or suppress precipitation and growth of lithium dendrites.

The negative electrode coating layer 220 may include at least one of, for example, the carbon material CRB and the metal MET.

The carbon material CRB may be or include, for example, amorphous carbon. The amorphous carbon may be or include, for example, at least one of carbon black (CB), acetylene black (AB), furnace black (FB), carbon nano-tube, ketjen black (KB), or graphene, but the present disclosure is not limited thereto. The amorphous carbon may be or include carbon that either lacks crystallinity, or that has substantially low crystallinity, and may be distinguished from crystalline carbon or graphite-based carbon. For example, the amorphous carbon may include at least one of carbon black (CB), acetylene black (AB), furnace black (FB), carbon nano-tube, ketjen black (KB), and graphene.

A conductive additive that can be suitable used in the present invention is Ketjenblack®, specifically Ketjenblack® EC-300J or Ketjenblack® EC-600JD. The Ketjenblack® is commercially available from Sigma-Aldrich.

The metal MET may include a metalloid, and for example, may include at least one of gold (Au), indium (In), germanium (Ge), platinum (Pt), palladium (Pd), silicon (Si), silver (Ag), aluminum (Al), bismuth (Bi), tin (Sn), and zinc (Zn), but the present disclosure is not limited thereto. The metal MET may form an alloy or compound with lithium. As nickel (Ni) does not form an alloy with lithium, the nickel (Ni) may not be classified as the metal MET.

The metal MET may have a particulate shape. The particulate-shaped metal MET may have a medium-sized average particle diameter ($D_{50}$) that is, for example, equal to or less than about 4 $\mu$m, 2 $\mu$m, 1 $\mu$m, or 900 nm. The medium-sized average particle diameter ($D_{50}$) of the metal MET may range, for example, from $\geq$ 10 nm to $\leq$ 4 $\mu$m, from $\geq$ 10 nm to $\leq$ 2 $\mu$m, or from $\geq$ 10 nm to $\leq$ 900 nm. As the metal MET has a medium-sized average particle diameter ($D_{50}$) that falls within the range above, absorption and/or desorption of lithium may be more readily achieved during charge and discharge. The medium-sized average particle diameter ($D_{50}$) may be a median diameter measured with a laser-type particle size distribution analyzer.

The negative electrode coating layer 220 may include one of the materials mentioned above or a mixture of different ones of the materials mentioned above. For example, the negative electrode coating layer 220 may include only amorphous carbon, or at least one of gold (Au), indium (In), germanium (Ge), platinum (Pt), palladium (Pd), silicon (Si), silver (Ag), aluminum (Al), bismuth (Bi), tin (Sn), and zinc (Zn).

In an example embodiment, the negative electrode coating layer 220 may include a mixture of amorphous carbon and at least one of gold (Au), indium (In), germanium (Ge), platinum (Pt), palladium (Pd), silicon (Si), silver (Ag), aluminum (Al), bismuth (Bi), tin (Sn), and zinc (Zn). In the negative electrode coating layer 220, the carbon material CRB and the metal MET may be mixed in a weight ratio in a range of about 1.2:1 to about 4:1. For example, the weight ratio of the carbon material CRB and the metal MET may be equal to about 1.2:1, 2:1, 3:1, or 4:1. As the carbon material CRB and the metal MET have the aforementioned weight ratio, sufficient ionic conductivity and smooth catalytic activity may be achieved to secure desired or improved output characteristics and capacity of the battery. In an example embodiment, the weight ratio of the carbon material CRB and the metal MET may be equal to about 3:1.

As the negative electrode coating layer 220 includes the binders BND1 and BND2, the negative electrode coating layer 220 may be stably formed on the negative electrode current collector 210. For example, an increased cohesive force may be provided between the negative electrode coating layer 220 and the negative electrode current collector 210. In addition, cracks of the negative electrode coating layer 220 may be reduced or suppressed despite a change in volume and/or relative position of the negative electrode coating layer 220 during charge and discharge. When the negative electrode coating layer 220 does not include the binders BND1 and BND2, the negative electrode coating layer 220 may be readily separated from the negative electrode current collector 210. As the negative electrode coating layer 220 is separated from the negative electrode current collector 210, on a region where the negative electrode current collector 210 is exposed, the negative electrode current collector 210 may be in contact with a solid electrolyte layer, and thus there may be an increase in probability of the occurrence of short circuit.

The negative electrode coating layer 220 may be manufactured by, for example, providing on the negative electrode current collector 210 a mixture in which a material of the negative electrode coating layer 220 is dispersed. As the binders BND1 and BND2 are included in the material of the negative electrode coating layer 220, it may be possible to accomplish stable dispersion of negative electrode materials. In addition, the binders BND1 and BND2 may improve adhesion of the negative electrode coating layer 220. For example, when screen printing is employed to coat the mixture on the negative electrode current collector 210, it may be possible to reduce or suppress a screen clogging caused by the binders BND1 and BND2 (e.g., a clogging resulting from aggregates of materials of the negative electrode coating layer 220).

The first binder BND1 may be in contact with materials (the metal MET, the carbon material CRB, and the second binder BND2) of the negative electrode coating layer 220, and may have desired or improved dispersibility to substantially uniformly disperse the constituent materials in the negative electrode coating layer 220.

The first binder BND1 may include at least one of an acrylate-based binder, a polyvinylidenefluoride-based binder, a polyvinylpyrrolidone-based binder, a polyvinylalcohol-based binder, and a cellulose-based binder. For example, the first binder BND1 may be an aqueous binder.

The acrylate-based binder may be or include, for example, at least one of polyacrylic acid (PAA), polymethylmethacrylate, polyisobutylmethacrylate, polyethylacrylate, polybutyl acrylate, or poly(2-ethylhexyl acrylate).

The polyvinylidenefluoride-based binder may be or include, for example, at least one of polyvinylidenefluoride (PVDF), poly(vinylidenefluoride-co-hexafluoropropylene), poly(vinylidenefluoride-co-trichloroethylene), poly(vinylidenefluoride-co-tetrafluoroethylene), poly(vinylidenefluoride-co-trifluoroethylene), poly(vinylidenefluoride-co-trifluorochloroethylene), poly(vinylidenefluoride-co-ethylenefluoride-hexafluoropropylene), or polyvinylidenefluoride-co-trichloroethylene.

The polyvinylpyrrolidone-based binder may be or include, for example, polyvinylpyrrolidone.

The polyvinylalcohol-based binder may be or include, for example, polyvinylalcohol.

The cellulose-based binder may be or include, for example, at least one of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), or cellulose gum. In an example embodiment, the first binder BND1 may be carboxymethyl cellulose (CMC).

The second binder BND2 may have desired or improved adhesive properties to allow negative electrode materials of the negative electrode coating layer 220 to substantially uniformly contact each other.

The second binder BND2 may include at least one of a rubber-based binder, an imide-based binder, a nitrile-based binder, an acetate-base binder, and a cyano-based binder.

The imide-based binder may be or include, for example, polyimide or polyamide imide.

The nitrile-based binder may be or include, for example, polyacrylonitrile or acrylonitrile-styrene-butadiene copolymer.

The acetate-based binder may be or include, for example, at least one of polyvinyl acetate, polyethylene-co-vinyl acetate, cellulose acetate, cellulose acetate butyrate, or cellulose acetate propionate.

The cyano-based binder may be or include, for example, cyanoethyl sucrose.

In an example embodiment, the second binder BND2 may be or include a rubber-based binder. The second binder BND2 may be different from the first binder BND1. In an example embodiment, the second binder BND2 may be or include styrene-butadiene rubber (SBR). In another example embodiment, the second binder BND2 may be or include nitrile-butadiene rubber (NBR).

Based on 100 parts by weight of the negative electrode coating layer 220, the first and second binders BND1 and BND2 may be included in an amount in a range of $\geq$ 3 parts by weight to $\leq$ 10 parts by weight, or about 3 parts by weight to $\leq$ 8 parts by weight, in the negative electrode coating layer 220. For example, based on 100 parts by weight of the negative electrode coating layer 220, the first binders BND1 may be included in an amount in a range of $\geq$ 1 part by weight to $\leq$ 5 parts by weight in the negative electrode coating layer 220. For example, based on 100 parts by weight of the negative electrode coating layer 220, the second binders BND2 may be included in an amount in a range of $\geq$ 1 part by weight to $\leq$ 5 parts by weight in the negative electrode coating layer 220. When the amount of the first and second binders BND1 and BND2 falls within the range above, a negative electrode slurry may improve in stability and coating adhesion. Therefore, the materials of the negative electrode coating layer 220 may be substantially uniformly dispersed in the negative electrode coating layer 220, adhesion of the negative electrode coating layer 220 may be improved, and resistance of a negative electrode including the negative electrode coating layer 220 may be reduced.

The negative electrode coating layer 220 may further include an additive in addition to the carbon material CRB, the metal MET, and the binders BND1 and BND2. For example, the negative electrode coating layer 220 may further include at least one of a filler, a coating agent, a dispersant, and an ionic conductivity agent.

The negative electrode layer 200 of the all-solid-state battery 10 according to an example embodiment may be manufactured using a negative electrode slurry which is discussed below. The negative electrode layer 200 may be manufactured using an ordinary technique for electrode production, but the present disclosure is not limited thereto. For example, doctor blading, spray, bar coating, slot-die coating, and the like, may be utilized to coat and dry a negative electrode slurry on the negative electrode current collector 210, and the mixture may then be pressed to manufacture an electrode. The negative electrode slurry may be formed into the negative electrode coating layer 220.

The following describes a negative electrode slurry and the preparation method thereof according to an example embodiment.

Negative Electrode Slurry and Its Preparation Method

FIG. 8 is a flow chart illustrating a method of manufacturing a negative electrode slurry, according to an example embodiment of the present disclosure. FIGS. 9 to 11 are schematic diagrams illustrating a method of manufacturing a negative electrode slurry, according to an example embodiment of the present disclosure.

Referring to FIG. 8, a method of manufacturing a negative electrode slurry according to an example embodiment of the present disclosure may include preparing a first mixture by mixing a negative electrode material with a binder solution that includes a solvent and a first binder (S100), performing an ultrasonic treatment on the first mixture to produce a dispersion (S200), and adding a second binder to the dispersion to prepare a second mixture (S300).

Referring to FIG. 9, a negative electrode material MAT and a binder solution that includes a first binder BND1 may be mixed to prepare a first mixture MXT1 (S100).

The negative electrode material MAT may include the carbon material CRB and the metal MET.

For example, the carbon material CRB may include at least one of carbon black (CB), acetylene black (AB), furnace black (FB), carbon nano-tube, ketjen black (KB), and graphene.

The metal MET may include a metalloid. For example, the metal MET may include at least one of gold (Au), indium (In), germanium (Ge), platinum (Pt), palladium (Pd), silicon (Si), silver (Ag), aluminum (Al), bismuth (Bi), tin (Sn), and zinc (Zn).

In the negative electrode material MAT, the carbon material CRB and the metal MET may be mixed in a weight ratio in a range of about 1.2:1 to about 4:1. For example, the weight ratio of the carbon material CRB to the metal MET may be equal to about 1.2:1, 2:1, 3:1, or 4:1.

The negative electrode material MAT may further include an additive. For example, the negative electrode material MAT may further include at least one of a filler, coating agent, a dispersant, and an ionic conductivity agent.

The binder solution may include a first binder BND1 and a solvent. The first binder BND1 may increase viscosity of the first mixture MXT1, and thus the first mixture MXT1 may be prepared in the form of a slurry. For example, the prepared first mixture MXT1 may be in the form of a slurry.

The first binder BND1 may be the first binder discussed above. For example, the first binder BND1 may include at least one of an acrylate-based binder, a polyvinylidenefluoride-based binder, a polyvinylpyrrolidone-based binder, a polyvinylalcohol-based binder, and a cellulose-based binder.

The acrylate-based binder may be or include, for example, at least one of polyacrylic acid (PAA), polymethylmethacrylate, polyisobutylmethacrylate, polyethylacrylate, polybutyl acrylate, or poly(2-ethylhexyl acrylate).

The polyvinylidenefluoride-based binder may be or include, for example, at least one of polyvinylidenefluoride (PVDF), poly(vinylidenefluoride-co-hexafluoropropylene), poly(vinylidenefluoride-co-trichloroethylene), poly(vinylidenefluoride-co-tetrafluoroethylene), poly(vinylidenefluoride-co-trifluoroethylene), poly(vinylidenefluoride-co-trifluorochloroethylene), poly(vinylidenefluoride-co-ethylenefluoride-hexafluoropropylene), or polyvinylidenefluoride-co-trichloroethylene. The polyvinylpyrrolidone-based binder may be or include, for example, polyvinylpyrrolidone. The polyvinylalcohol-based binder may be or include, for example, polyvinylalcohol.

The cellulose-based binder may be or include, for example, at least one of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), or cellulose gum. In an example embodiment, the first binder BND1 may be or include carboxymethyl cellulose (CMC).

The first binder BND1 may have desired or improved dispersibility to substantially uniformly disperse components of the negative electrode material MAT and simultaneously or contemporaneously to allow slurry to have desired viscosity.

The solvent may be or include an aqueous solvent or a non-aqueous solvent. In an example embodiment, the solvent may be water.

In this description, an "aqueous solvent" may refer to a solvent in which water is a primary component. For example, the aqueous solvent may include water. In addition, the aqueous solvent may further include at least one of methanol, ethanol, ethylene glycol, diethylene glycol, and glycerol.

The first binder BND1 may be present in an amount in a range of ≥ 0.5 wt% to ≤ 10 wt% in the binder solution. For example, the amount of the first binder BND1 in the binder solution may be in a range of ≥ 0.5 wt% to ≤ 5 wt%, about 0.8 wt% to ≤ 3.5 wt%, or about 0.8 wt% to ≤ 3 wt%, or may be equal to about 1 wt%.

The negative electrode material MAT may be mixed with the binder solution. There may be no particular limitation on the mixing method. In an example embodiment, the binder solution may be added to the negative electrode material MAT, and a planetary mixer may then be utilized to agitate the mixture at a temperature in a range of ≥ 20 °C to 60°C for a duration in a range of ≥ 20 minutes to ≤ 250 minutes.

The binder solution may be added to allow the first binder BND1 to have an amount in a range of ≥ 1 wt% to ≤ 5 wt% in the first mixture MXT1.

When the amount of the first binder BND1 in the first mixture MXT1 is less than the range above, there may be a reduction in dispersion effect of negative electrode material particles in a dispersion process, which is discussed below When the amount of the first binder BND1 is greater than the range above, the first binder BND1 may be substantially adsorbed on surfaces of carbon or metal particles, and cause the hindrance of migration of lithium ions. Accordingly, a battery may increase in internal resistance.

The first mixture MXT1 may have a viscosity in a range of ≥ 1,000 cps to ≤ 4,000 cps. For example, the viscosity of the first mixture MXT1 may range from ≥ 1,000 cps to ≤ 3,500 cps, from ≥ 1,500 cps to ≤ 3,000 cps, from ≥ 1,500 cps to ≤ 2,500 cps, or from ≥ 2,000 cps to ≤ 2,500 cps.

A probe-type ultrasonic disperser can be suitable used for dispersion of the conductive additive, and for example, the VCX-750 model (product name: Sonics Vibra-Cell VCX-750) may be used. The disperser is a product commercially available from Sonics & Materials, Inc. (USA). The dispersion was performed under conditions of output 200 W, frequency 20 kHz, and rotation speed 5000 rpm, for a total dispersion time of 30 minutes. Such conditions may be adjusted within a range applicable to a person skilled in the art.

The shear viscosity of the conductive dispersion can be suitable measured using a rheometer commercially available from Anton Paar (product name: MCR 302e). The measurement was carried out at 20 °C, using a CC27 cone-plate spindle, and the rotation speed was controlled from 10 rpm to 100 rpm. In addition, the rheometer was controlled and data were analyzed using the dedicated software (RheoCompass™) from Anton Paar.

When the amount of the first binder BND1 in the first mixture MXT1 falls within the range above, and when the viscosity of the first mixture MXT1 satisfies the range above, there may be an increase in contact amount between the first binder BND1 and the negative electrode material MAT.

A solid content in the first mixture MXT1 may be present in an amount in a range of ≥ 15 wt% to ≤ 45 wt%. The solid content in the first mixture MXT1 may include the negative electrode material MAT and the first binder BND1. For example, the amount of the solid content in the first mixture MXT1 may range from ≥ 15 wt% to ≤ 40 wt%, from ≥ 15 wt% to ≤ 35 wt%, from ≥ 20 wt% to ≤ 35 wt%, or from ≥ 20 wt% to ≤ 30 wt%.

When the amount of the solid content in the first mixture MXT1 deviates from the range above, a solvent may be added in a concentration adjustment process S110 which is discussed above to control the amount of the solid content in the first mixture MXT1. The solvent may be the same as the solvent discussed above in the first mixture preparation step S100. In an example embodiment, the solvent may be an aqueous solvent. For example, the solvent may include water.

Referring to FIGS. 10A and 10B, the first mixture MXT1 may undergo an ultrasonic dispersion treatment to produce a dispersion DSP (S200).

In general, a disperser may be used to disperse a mixture. The type of disperser is not limited as long as the disperser can apply a shear force or an impact force to the mixture. For example, the disperser may be a high-pressure disperser, a disperser including grinding media, or an ultrasonic disperser.

For example, the high-pressure disperser may include a microfludizer (MFD). The high-pressure disperser may require flowability with a specific viscosity, and may exhibit a disadvantage in that a particle size of slurry is restricted due to a nozzle size.

The disperser including a grinding media may include a grinding media such as balls or beads therein, and may be configured to apply a physical impact to materials through the grinding media for particle grinding and dispersion. For example, the disperser including grinding media may be any one of bead mill, ball mill, spike mill, basket mill, and attrition mill.

The disperser including a grinding media may have the drawback that the grinding media may break with long-term use, and may require a process to clean the grinding media, which may reduce process efficiency.

The ultrasonic disperser may be advantageous in terms of process efficiency compared to the high-pressure disperser or the disperser including the grinding media.

The ultrasonic dispersion treatment according to the present disclosure may use an ultrasonic disperser that applies vibration to the first mixture MXT1 to enhance dispersion.

The ultrasonic disperser may refer to an apparatus that applies ultrasonic energy to agitate particles within a sample. Any ultrasonic disperser that is capable of dispersing an aqueous solvent-based electrode slurry disclosed in this description may be used. Some non-limiting examples of the ultrasonic disperser may include an ultrasonic bath, a probe-type ultrasonic disperser, and an ultrasonic flow cell.

The ultrasonic bath may refer to an apparatus through which an ultrasonic energy is transmitted via a container wall of the ultrasonic bath into a liquid sample.

The probe-type ultrasonic disperser may refer to an ultrasonic probe immersed into a medium for direct sonication.

The direct sonication may indicate that ultrasonic waves are directly coupled into a processing solution.

FIG. 10A depicts a method in which a probe-type ultrasonic disperser is included to produce the dispersion DSP.

FIG. 10B depicts a method in which an ultrasonic bath is used to produce the dispersion DSP.

For example, the ultrasonic disperser may be a probe-type ultrasonic disperser.

Referring to FIG. 10A, the probe-type ultrasonic disperser may include a cylindrical probe having a diameter d1. The diameter d1 of the probe may range from ≥ 2 mm to ≤ 30 mm, preferably in the range from 2 mm to 30 mm.

Ultrasonic dispersion may reduce or prevent the negative electrode material MAT and the first binder BND1 from degradation or destruction, and may produce the dispersion DSP in which the negative electrode material MAT and the first binder BND1 are substantially uniformly dispersed. For example, the ultrasonic dispersion may allow particles of the negative electrode material MAT to more substantially uniformly disperse in the first mixture MXT1.

A dispersion time of the first mixture MXT1 may be determined as desired depending on a type of disperser used and an operating condition. For example, the dispersion of the first mixture MXT1 may be performed at a temperature in a range of ≥ 20 °C to 60°C for a duration in a range of ≥ 10 minutes to ≤ 120 minutes.

The ultrasonic dispersion treatment may irradiate the first mixture MXT1 with ultrasonic waves in a frequency range of ≥ 20 kHz to ≤ 200 kHz.

When the above frequency condition is satisfied, it may be possible to effectively improve dispersibility of particles of the negative electrode material MAT in the first mixture MXT1. When the frequency range is less than about 20 kHz, the first mixture MXT1 may not be dispersed as desired, and when the frequency range is greater than about 200 kHz, the high frequency may cause deterioration of physical properties of the first mixture MXT1. When the ultrasonic dispersion time is less than about 10 minutes, the first mixture MXT1 may not be dispersed as desired, and when the ultrasonic dispersion time is greater than about 120 minutes, a long-time irradiation of ultrasonic waves may affect particles of the negative electrode material MAT to generate a region where the negative electrode material MAT is crushed.

The ultrasonic dispersion treatment may include repeatedly performing a dispersion step about 2 to 10 times. The ultrasonic dispersion treatment may be performed for a duration range of ≥ 10 minutes to ≤ 120 minutes at a time.

Referring to FIG. 11, a second binder BND2 may be mixed with the dispersion DSP to prepare a second mixture MXT2 (S300). For example, the prepared second mixture MXT2 may be in the form of slurry, and may be or include a negative electrode slurry for an all-solid-state battery according to an example embodiment of the present disclosure.

The second binder BND2 may have desired or improved adhesive properties. For example, the second binder BND2 may include at least one of a rubber-based binder, an imide-based binder, a nitrile-based binder, an acetate-base binder, and a cyano-based binder.

The imide-based binder may be or include, for example, polyimide or polyamide imide.

The nitrile-based binder may be or include , for example, polyacrylonitrile or acrylonitrile-styrene-butadiene copolymer.

The acetate-based binder may be or include, for example, at least one of polyvinyl acetate, polyethylene-co-vinyl acetate, cellulose acetate, cellulose acetate butyrate, or cellulose acetate propionate.

The cyano-based binder may be or include, for example, cyanoethyl sucrose.

In an example embodiment, the second binder BND2 may be or include a rubber-based binder. For example, the second binder BND2 may be different from the first binder BND1. In an example embodiment, the second binder BND2 may be or include styrene-butadiene rubber (SBR). In another example embodiment, the second binder BND2 may be or include nitrile-butadiene rubber (NBR).

The second binder BND2 may be provided in a solution state dissolved in a solvent. For example, the solvent may be or include an aqueous solvent or a non-aqueous solvent. In an example embodiment, the solvent may be water.

The second binder BND2 may be mixed into the dispersion DSP. There may be no particular limitation on the mixing method. In an example embodiment, the second binder BND2 may be added to the dispersion DSP, and a planetary mixer may then be utilized to agitate the mixture at a temperature in a range of ≥ 20 °C to ≤ 60°C for a duration in a range of ≥ 20 minutes to ≤ 250 minutes.

The second binder BND2 may be added to have an amount in a range of ≥ 0.5 wt% to < 5 wt% in the second mixture MXT2. For example, the amount of the second binder BND2 in the second mixture MXT2 may range from ≥ 1 wt% to ≤ 4 wt% or from ≥ 1.5 wt% to ≤ 3 wt%.

When the amount of the second binder BND2 in the second mixture MXT2 falls within the range above, the second mixture MXT2 (or negative electrode slurry) may have desired adhesive properties and viscosity to increase coating adhesion and dispersion stability.

A total amount of the first and second binders BND1 and BND2 in the second mixture MXT2 may range from ≥ 1 wt% to ≤ 10 wt%. When the amount of the first and second binders BND1 and BND2 in the second mixture MXT2 is less than the range above, the negative electrode material MAT may not be sufficiently dispersed. When the amount of the first and second binders BND1 and BND2 in the second mixture MXT2 is greater than the range above, the first and second binders BND1 and BND2 may be substantially adsorbed on surfaces of particles of the carbon material CRB or the metal MET to obstruct migration of lithium ions, and to increase a battery internal resistance.

A solid content in the second mixture MXT2 may include the negative electrode material MAT, the first binder BND1, and the second binder BND2. For example, the solid content in the second mixture MXT2 may be present in an amount in a range of ≥ 15 wt% to ≤ 50 wt%, of ≥ 15 wt% to ≤ 45 wt%, of ≥ 20 wt% to ≤ 45 wt%, or of ≥ 20 wt% to ≤ 30 wt%. For example, the second binder BND2 may be added in the aforementioned amount to allow the amount of the solid content in the second mixture MXT2 to fall within the range above.

When the amount of the solid content in the second mixture MXT2 deviates from the range above, a solvent may be added to adjust the amount of the solid content in the second mixture MXT2. The solvent may be the same as the solvent discussed above. In an example embodiment, the solvent may be an aqueous solvent. For example, the solvent may include water.

Compared to other slurry having the same amount of solid content, the second mixture MXT2 (or negative electrode slurry) may have a relatively low viscosity. For example, according to measurement results of shear viscosity of the negative electrode slurry for an all-solid-state battery in accordance with examples of the present disclosure, under the condition of a temperature of about 20°C and a shear rate of about 10 (1/s), the negative electrode slurry may have a viscosity ranging from about 200 mPa·s to ≤ 1,000 mPa·s, for example, from about 150 mPa·s to ≤ 500 mPa·s.

Compared to other slurry having the same amount of solid content, the second mixture MXT2 (or negative electrode slurry) may have desired or improved dispensability or dispersibility. For example, according to measurement results of shear viscosity of the negative electrode slurry for an all-solid-state battery in accordance with the present disclosure, a thixotropic index (TI) or a ratio of viscosity at a shear rate of 1 (1/s) and a shear rate of 10 (1/s) under a temperature of about 20°C may be equal to or greater than about 0.2. In detail, the TI may range from about 0.2 to ≤ 0.6.

According to examples of the present disclosure, the first binder BND1 and the second binder BND2 may be added separately before and after the dispersion process. For example, after the dispersion process, the second binder BND2 may be added to the dispersion DSP. Thus, dispersibility of the second binder BND2 may be substantially prevented from being reduced due to destruction and degradation caused by a disperser.

In conclusion, according to examples of the present disclosure, the negative electrode slurry for an all-solid-state battery may be prepared to have improved dispersibility, adhesion, and phase stability. Therefore, an all-solid-state battery fabricated using the negative electrode slurry of the examples of the present disclosure may have improved performance.

Referring again to FIG. 8, the method of fabricating a negative electrode slurry for an all-solid-state battery according to an example embodiment of the present disclosure may further include, after the step S100, additionally adding a solvent to the first mixture MXT1 to adjust the amount of solid content (S110). The solvent may be the same as the solvent discussed above in the preparation of the first mixture MXT1. In an example embodiment, the solvent may be an aqueous solvent. For example, the solvent may include water.

In the adjustment of the solid content amount (S110), a solvent may be additionally added to the first mixture MXT1 such that the solid content in the first mixture MXT1 may have an amount in a range of ≥ 15 wt% to ≤ 45 wt%. For example, the first mixture MXT1 may be additionally added with water to allow the solid content in the first mixture MXT1 to have an amount ranging from about 15 wt% to ≤ 40 wt%, from about 15 wt% to ≤ 35 wt%, from about 20 wt% to ≤ 35 wt%, or from about 20 wt% to ≤ 30 wt%.

The first mixture MXT1 to which the solvent is additionally added may have a viscosity in a range of ≥ 1,000 cps to ≤ 4,000 cps. For example, the viscosity of the first mixture MXT1 may range from about 1,000 cps to ≤ 3,500 cps, from about 1,300 cps to ≤ 3,000 cps, from about 1,300 cps to ≤ 2,500 cps, or from about 1,500 cps to ≤ 2,500 cps.

When the amount of solid content in the first mixture MXT1 falls within the range above, an desired viscosity may be achieved to effectively exhibit dispersibility in the ultrasonic dispersion treatment.

The present disclosure is discussed below in detail through example embodiments. These example embodiments are provided to illustrate examples of the present disclosure, and the scope of the present disclosure is not limited to these example embodiments.

Embodiment 1: Manufacture of Negative Electrode Slurry

1) Silver (Ag) and carbon black were mixed to prepare a negative electrode material. A composition of the negative electrode material was adjusted to allow silver (Ag) and carbon black to have a weight ratio of 25:75.

2) An aqueous solution of carboxymethyl cellulose (CMC) containing 1 wt% solid content was added to the negative electrode material, and then mixed at a temperature of 25°C for 120 minutes to prepare a first mixture in the form of slurry. For example, the mixing was carried out by agitating the negative electrode material and the aqueous CMC solution at a weight ratio of 43:57.

Afterwards, in order to adjust viscosity, water was added to eventually prepare the first mixture with a solid content of 23 wt% and a viscosity of 1,865 cps.

3) A probe-type ultrasonic disperser (with a probe diameter of 14 mm) was used to perform an ultrasonic dispersion treatment in which the first mixture was provided with a frequency of 30 kHz for 10 minutes to produce a dispersion. The ultrasonic dispersion treatment was performed in such a way that a propeller disperser was used to execute agitation in a water bath with a size between 100 mL to 2 L.

4) After the termination of the ultrasonic dispersion treatment, the dispersion was added with an aqueous dispersion solution to which styrene-butadiene rubber (SBR) was added, and then mixed at a temperature of 25°C for 60 minutes to prepare a second mixture or a negative electrode slurry. For example, the mixing was carried out by agitating the dispersion and the aqueous dispersion solution at a weight ratio of 97:3. As a result, there was prepared a negative electrode slurry with a solid content amount of 25 wt%.

Embodiment 2

A negative electrode slurry was manufactured in the same method as in Embodiment 1, with a difference that the ultrasonic dispersion treatment was performed using an ultrasonic disperser with a probe diameter of 7 mm.

Embodiment 3

A negative electrode slurry was manufactured in the same method as in Embodiment 1, with a difference that the ultrasonic dispersion treatment was performed for 60 minutes.

Embodiment 4

A negative electrode slurry was manufactured in the same method as in Embodiment 3, with a difference that the ultrasonic dispersion treatment was performed using an ultrasonic disperser with a probe diameter of 7 mm.

Comparative 1: Slurry Manufactured Without Dispersion Process

A negative electrode slurry was manufactured in the same method as in Embodiment 1, with a difference that no dispersion was performed. For example, an aqueous solution of styrene-butadiene rubber (SBR) was added to the first mixture, and then agitated to prepare a second mixture or a negative electrode slurry.

Comparative 2: Slurry Subject to High-Pressure Dispersion Process

A negative electrode slurry was manufactured in the same method as in Embodiment 1, with a difference that the ultrasonic dispersion treatment was performed using a high-pressure disperser instead of the probe-type ultrasonic disperser.

For example, the first mixture was added to a high-pressure disperser (e.g., microfludizer), and high-pressure dispersion was performed at a temperature of 25°C for 1 hour. After the termination of the dispersion process, the dispersion was added with an aqueous dispersion solution to which styrene-butadiene rubber (SBR) was added, and then mixed at a temperature of 25°C for 60 minutes to prepare a second mixture or a negative electrode slurry.

Evaluation 1: Analysis on Surface Image of Negative Electrode Slurry

A scanning electron microscope (SEM) was utilized to capture the negative electrode slurry according to the examples and the comparative examples. FIG. 12A illustrates a result of SEM analysis on a surface of a negative electrode slurry according to an example embodiment of the present disclosure. FIG. 12B illustrates a result of SEM analysis on a surface of a negative electrode slurry according to a comparative example.

Referring to FIG. 12A, it may be observed that metal particles are uniformly dispersed on a surface of the negative electrode slurry according to the examples.

In contrast, referring to FIG. 12B, it may be observed that agglomeration of metal particles occurs on a surface of the negative electrode slurry according to Comparative 1.

Evaluation 2: Measurement of Shear Viscosity

A rheometer commercially available from Anton Paar Company was used to measure a shear viscosity at a temperature of 20°C for the slurry of the examples and the comparative examples. 10 ml of the slurry was introduced into equipment to measure the shear viscosity. The result was shown in FIG. 13 and Table 1 below.

Table 1:

| | Shear 10 (mPa·s) | TI |
|---|---|---|
| Embodiment 1 | 361 | 0.52 |
| Embodiment 2 | 338 | 0.49 |
| Embodiment 3 | 204 | 0.50 |
| Embodiment 4 | 93 | 0.35 |
| Comparative 1 | 1736.6 | 0.72 |
| Comparative 2 | 548 | 0.77 |
| * TI (thixotropic index): a ratio of viscosity at shear rate 10 to viscosity at shear 1 | | |

Referring to Table 1, the slurry of each of the examples was measured to have less than 0.55 of a thixotropic index (TI) or a ratio of viscosity at shear 1 (1/s) and viscosity at shear 10 (1/s). In contrast, the slurry of each of the comparative examples was measured to have greater than 0.55 of a thixotropic index (Ti).

The slurry of each of the comparative examples has a viscosity that is greater than 500 mPa·s at shear 10 (1/s). However, the slurry of each of the examples has a viscosity that is less than 500 mPa·s at shear 10 (1/s).

Although the slurry of the example and the slurry of the comparative example have the same amount of solid content, it may be ascertained that, compared to the slurry of the comparative example, the slurry of the example has improved dispersibility and viscosity.

In addition, referring to FIG. 13, compared to the slurry of the comparative example, the slurry of the example may have a narrow graph width between increasing and decreasing curves. This may indicate that there is less agglomeration and good dispersion in the slurry according to the example.

Evaluation 3: Lifespan Characteristics of All-Solid-State Battery

A doctor blade was used to coat on a stainless (SUS) current collector the negative electrode slurry with a thickness of 40 μm prepared according to each example and comparative example, and then the electrode was dried in an oven at 80°C. After the electrode was dried, a hot roll press at 60°C was used to press the negative electrode to achieve a thickness of 10 μm. Then, the manufactured negative electrode was applied to an all-solid-state battery.

In this evaluation, cell performance of the all-solid-state battery was checked, and the all-solid-state battery was charged and discharged under a constant current mode in a charge-discharge tester. The all-solid-state battery was charged and discharged for 100 cycles under the condition of charging (0.33 C/4.25 V, 0.01 C cut-off, rest for 10 minutes) and discharging (0.33 C/2.5 V cut-off, rest for 10 minutes) with an applied current density of 300 mAh.

A capacity recovery rate was calculated according to Equation 1, and the result was listed in Table 2 below.

Capacity recovery rate (%) = (discharge capacity of 100 cycles / discharge capacity of 1 cycle) $\times$ 100 Equation 1:

Table 2:

| Lifespan characteristics | 100 cycles |
|---|---|
| | Capacity recovery rate (%) |
| Comparative 1 | 58.8 |
| Comparative 2 | 71.3 |
| Embodiment 4 | 74.2 |

As shown in Table 2, the all-solid-state battery using the negative electrode according to the examples of the present disclosure was found to exhibit an improved capacity recovery rate compared to the comparative examples.

Thus, when using the negative electrode slurry described in the claims of the present disclosure, the negative electrode slurry may exhibit desired or improved dispersibility and homogeneity to obtain a negative electrode coating layer with a uniform composition when the negative electrode slurry is coated on a negative electrode current collector. Therefore, it may be ascertained that it is possible to fabricate an all-solid-state battery with improved performance.

A method of manufacturing a negative electrode slurry for an all-solid-state battery according to an example embodiment of the present disclosure may provide a negative electrode slurry in which carbon materials and metal particles have desired or improved dispersibility in a negative electrode material.

In examples of the present disclosure, the negative electrode slurry discussed above may be applied to provide a negative electrode having desired or improved performance, and an all-solid-state battery including the negative electrode.

Although some example embodiments of the present disclosure have been discussed with reference to accompanying figures, it is understood that various changes in form and details may be made therein without departing from the spirit and scope of the present disclosure. It therefore is understood that the example embodiments described above are just illustrative but not limitative in all aspects.

## Claims

**1.** A method of manufacturing a negative electrode slurry for an all-solid-state battery (100), the method comprising:

preparing a first mixture by mixing a negative electrode material with a binder solution that comprises a solvent and a first binder;
producing a dispersion by performing an ultrasonic dispersion treatment on the first mixture; and
preparing a second mixture by adding a second binder to the dispersion.

**2.** The method of claim 1, wherein the first binder comprises at least one of an acrylate-based binder, a polyvinylidenefluoride-based binder, a polyvinylpyrrolidone-based binder, a polyvinylalcohol-based binder, and a cellulose-based binder.

**3.** The method of claim 1 or 2, wherein the negative electrode material comprises a carbon material and a metal, wherein a weight ratio of the carbon material to the metal is in a range of about 1.2:1 to about 4:1.

**4.** The method according to any one of claims 1 to 3, wherein the negative electrode material comprises a carbon material and a metal, and
wherein the carbon material comprises at least one of carbon black, acetylene black, furnace black, carbon nanotube, ketjen black, and graphene.

**5.** The method according to any one of claims 1 to 4, wherein the negative electrode material comprises a carbon material and a metal, and
wherein the metal comprises at least one of gold (Au), indium (In), germanium (Ge), platinum (Pt), palladium (Pd), silicon (Si), silver (Ag), aluminum (Al), bismuth (Bi), tin (Sn), and zinc (Zn).

**6.** The method according to any one of claims 1 to 5, wherein an amount of the first binder in the first mixture is in a range of ≥ 1 wt% to ≤ 5 wt%.

**7.** The method according to any one of claims 1 to 6, wherein preparing the first mixture comprises performing a mixing process at a temperature of ≥ 20°C to ≤ 60°C for a duration of ≥ 20 minutes to ≤ 250 minutes.

**8.** The method according to any one of claims 1 to 7, further comprising additionally adding the solvent to the first mixture to adjust a solid content in the first mixture to a range of ≥ 15 wt% to ≤ 45 wt%.

**9.** The method according to any one of claims 1 to 8, wherein the ultrasonic dispersion treatment is performed at a frequency in a range of ≥ 20 kHz to ≤ 200 kHz.

**10.** The method according to any one of claims 1 to 9, wherein the ultrasonic dispersion treatment is performed at a temperature in a range of ≥ 20°C to ≤ 60°C for a duration in a range of ≥ 10 minutes to ≤ 120 minutes.

**11.** The method according to any one of claims 1 to 10, wherein the ultrasonic dispersion treatment comprises using a probe-type ultrasonic disperser,
wherein a probe diameter of the ultrasonic disperser is in a range of about 2 mm to about 30 mm.

**12.** The method according to any one of claims 1 to 11, wherein the second binder comprises at least one of a rubber-based binder, an imide-based binder, a nitrile-based binder, an acetate-base binder, and a cyano-based binder.

**13.** The method according to any one of claims 1 to 12, wherein an amount of the second binder in the second mixture is in a range of ≥ 0.5 wt% to ≤ 5 wt%.

**14.** The method according to any one of claims 1 to 13, wherein preparing the second mixture comprises performing a mixing process at a temperature of ≥ 20°C to ≤ 60°C for a duration in a range of ≥ 10 minutes to ≤ 120 minutes.

**15.** A negative electrode (200) for an all-solid-state battery (100), the negative electrode (200) comprising:

a negative electrode current collector (210); and
a negative electrode coating layer (220),
wherein the negative electrode coating layer (220) is coated on the negative electrode current collector (210) and comprises a negative electrode slurry manufactured according to any one of claims 1 to 14.

FIG. 1

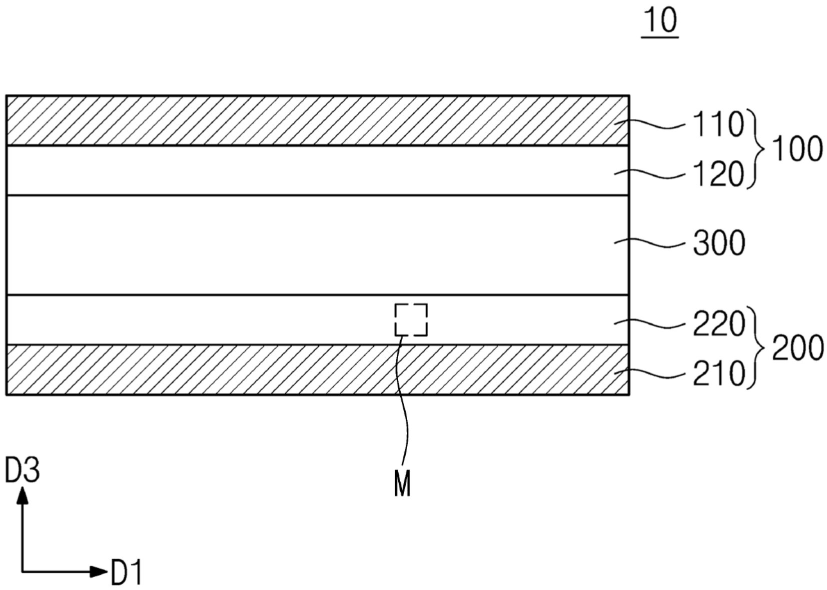
10
110
120
100
300
220
210
200
M
D3
D1

FIG. 2

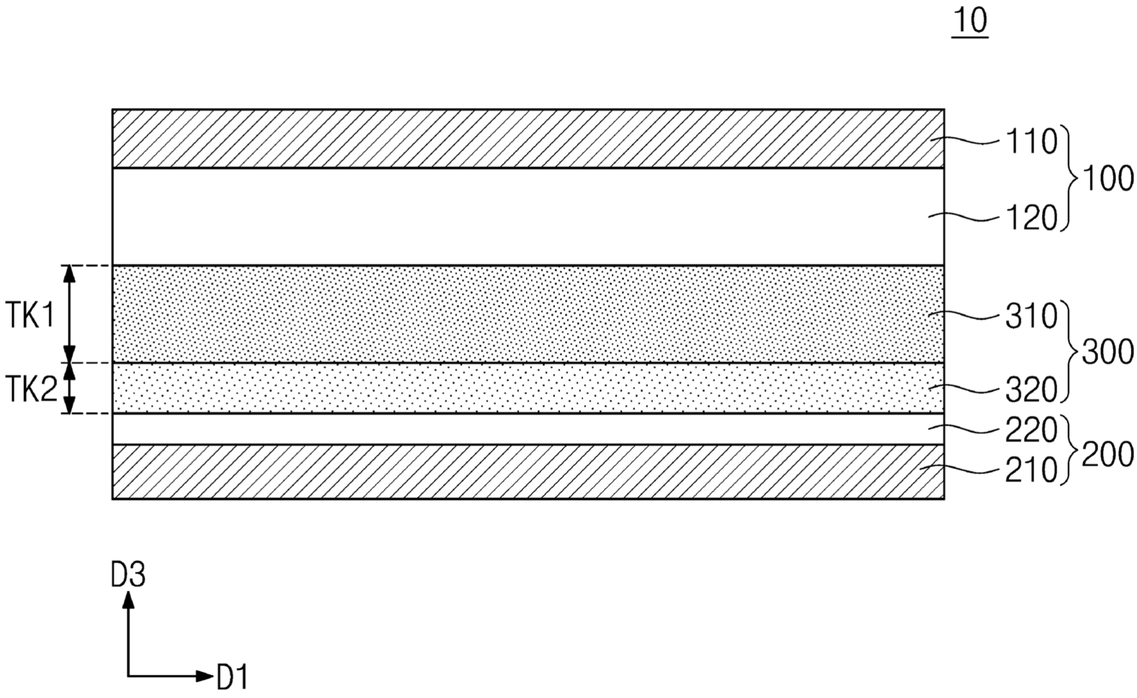
10
110
120
100
TK1
TK2
310
320
300
220
210
200
D3
D1

FIG. 3

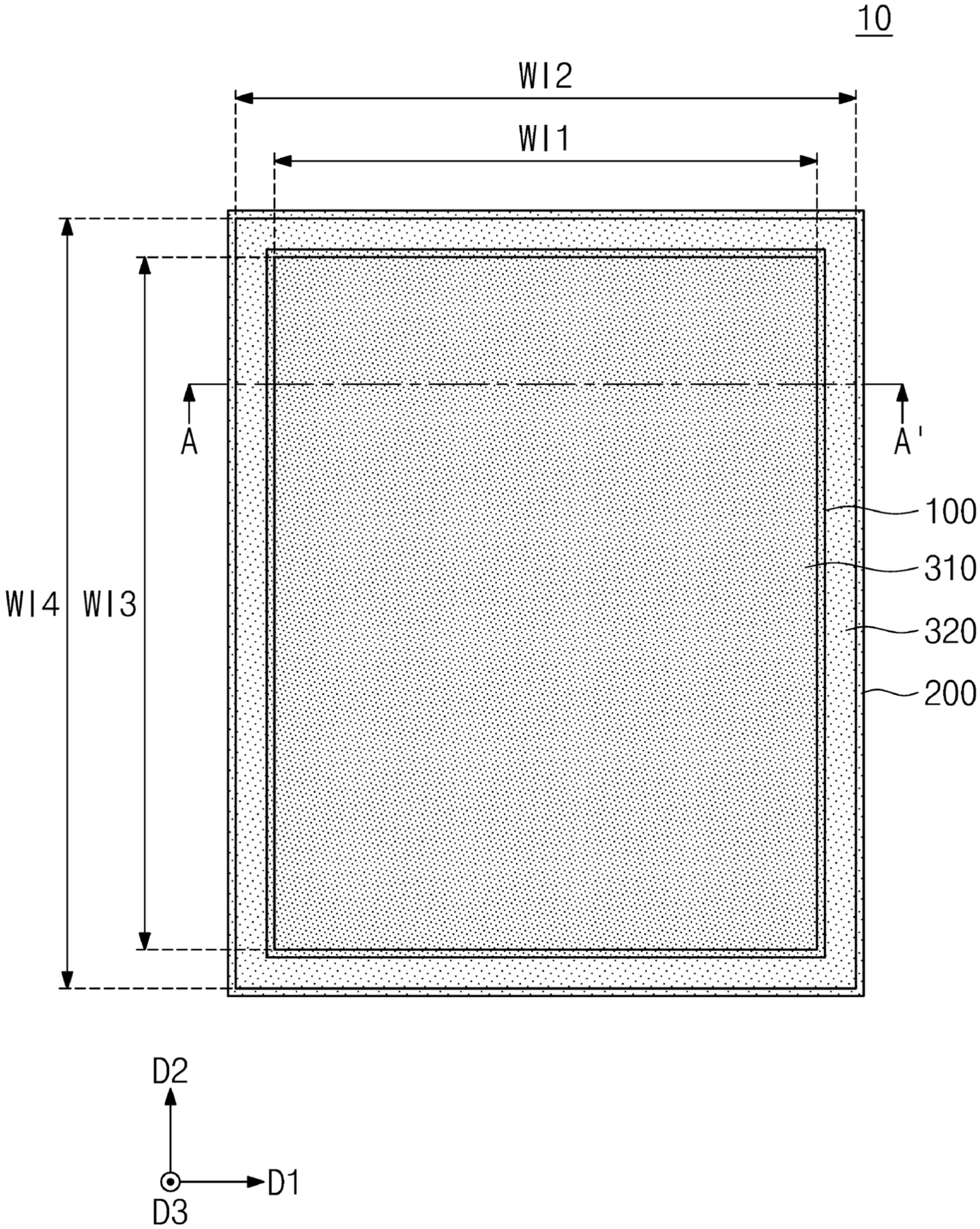

FIG. 4

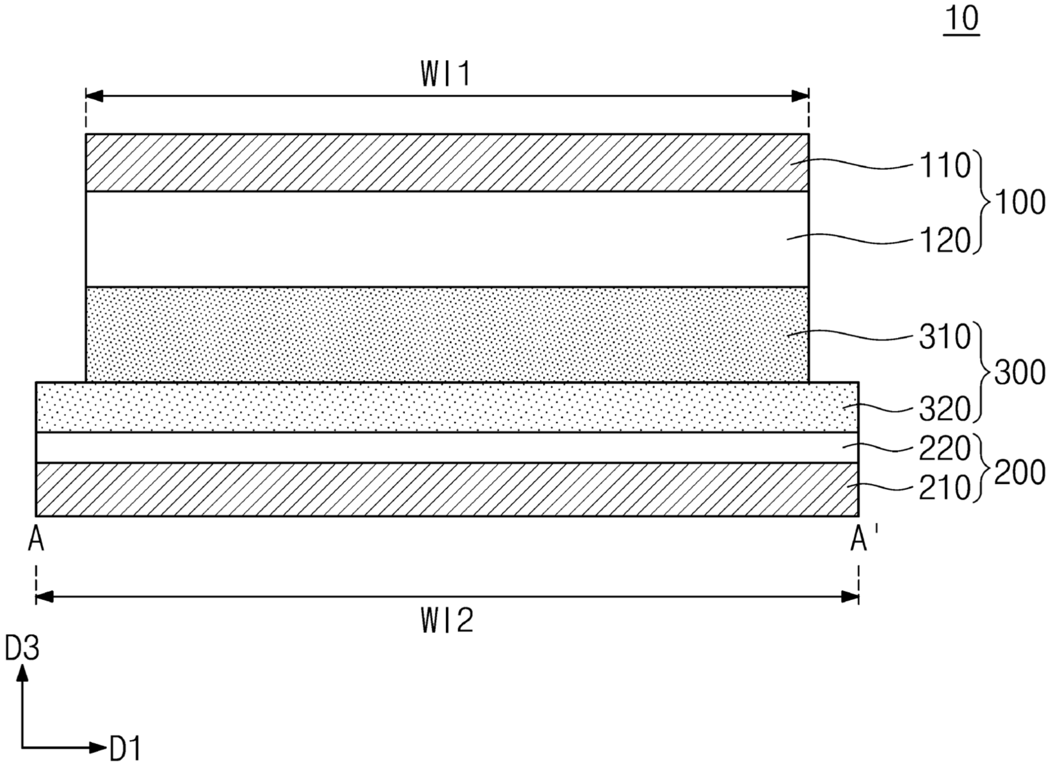
10
WI1
110
120
100
310
320
300
220
210
200
A
A'
WI2
D3
D1

FIG. 5

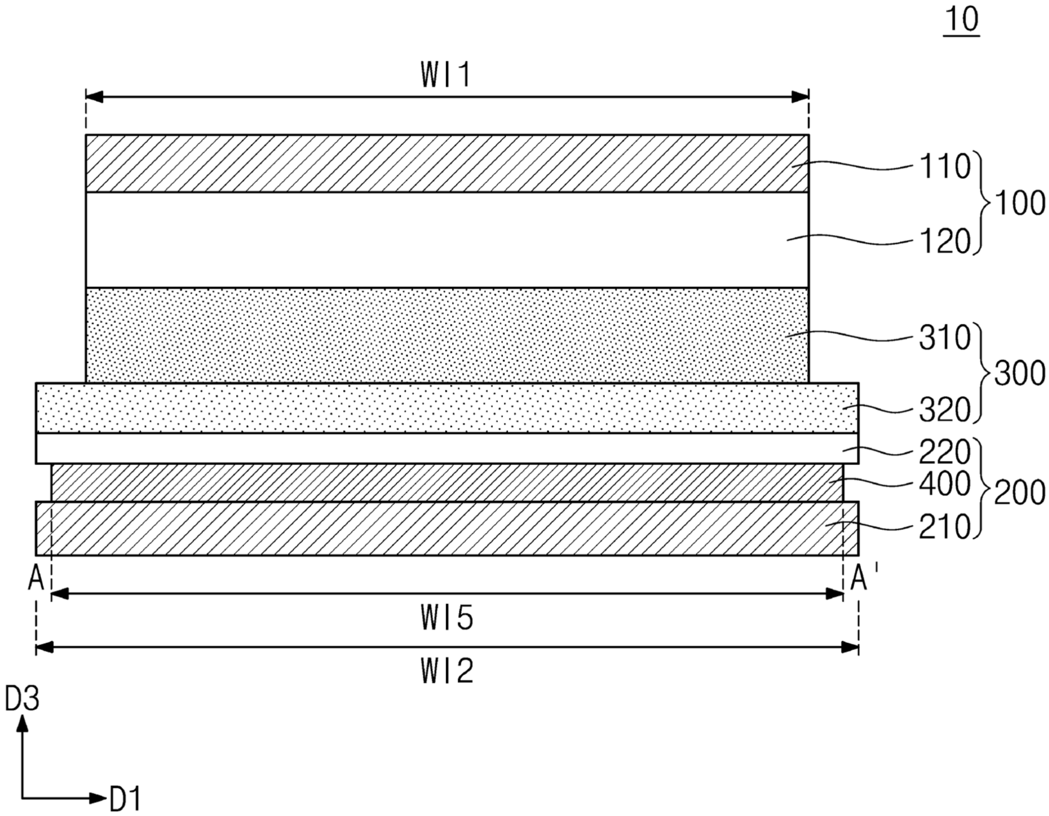
10
WI1
110
120
100
310
320
300
220
400
210
200
A
A'
WI5
WI2
D3
D1

FIG. 6

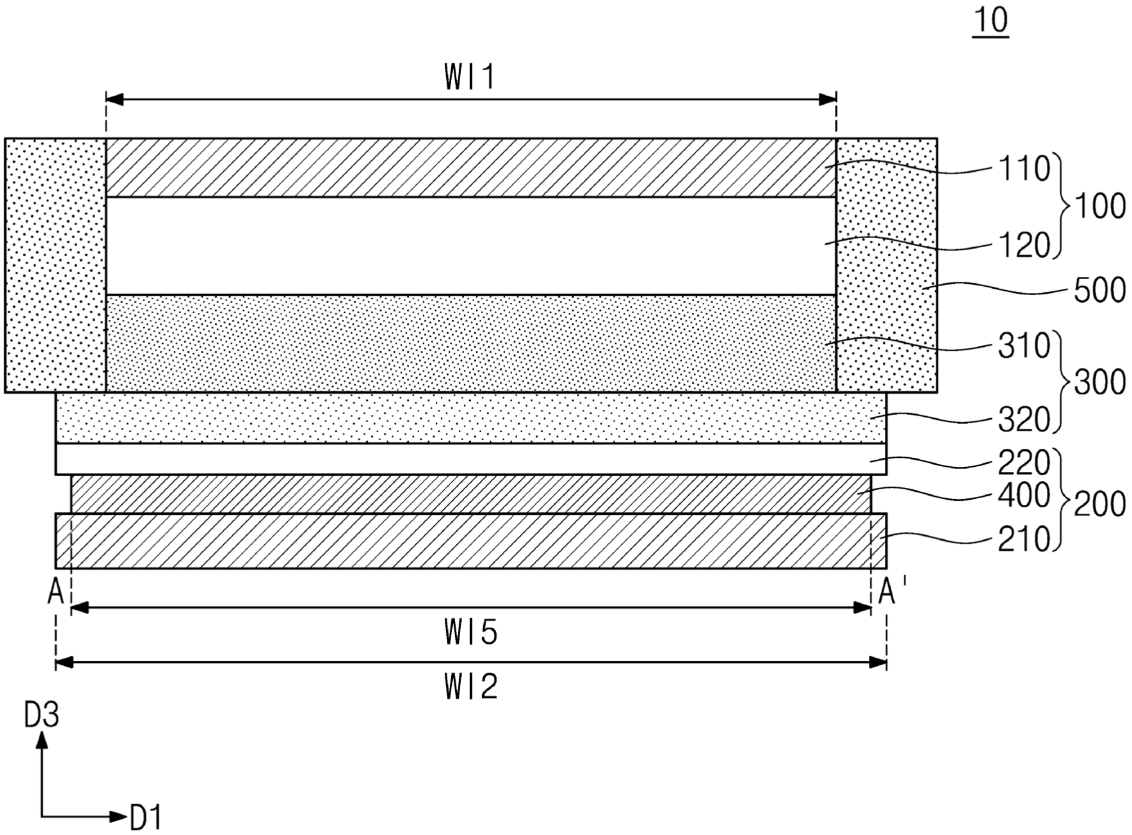
10
WI1
110
100
120
500
310
300
320
220
400
200
210
A
A'
WI5
WI2
D3
D1

FIG. 7

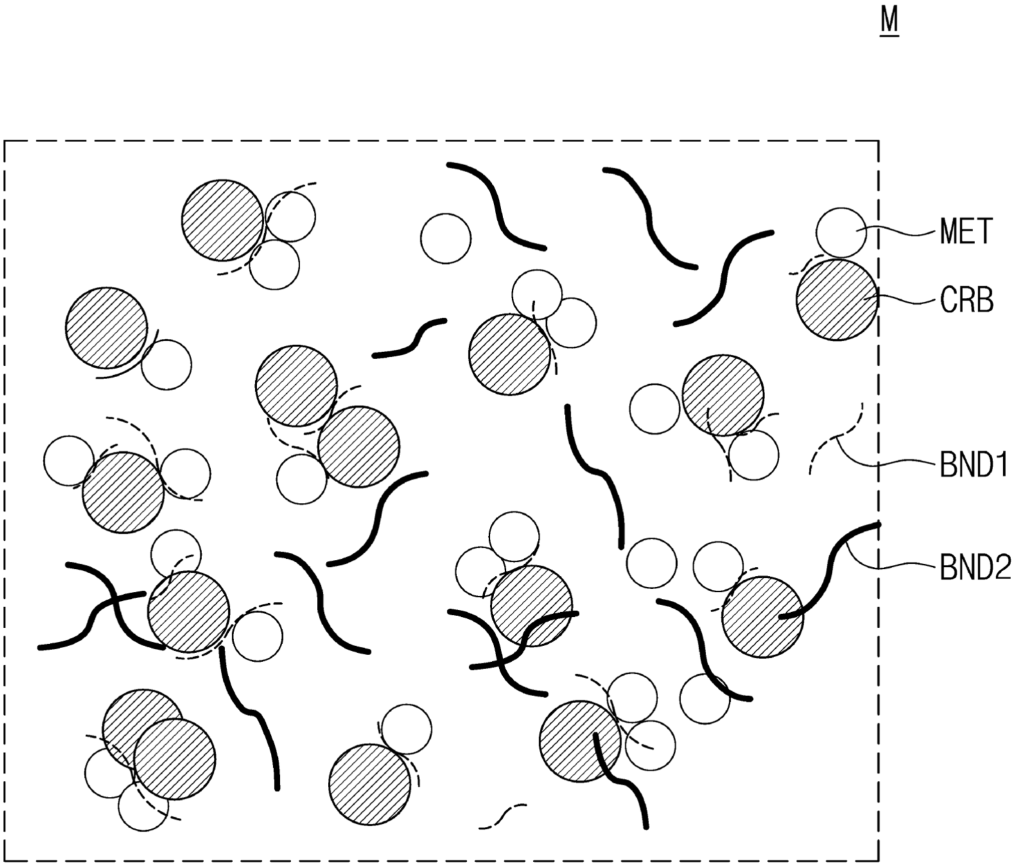

FIG. 8

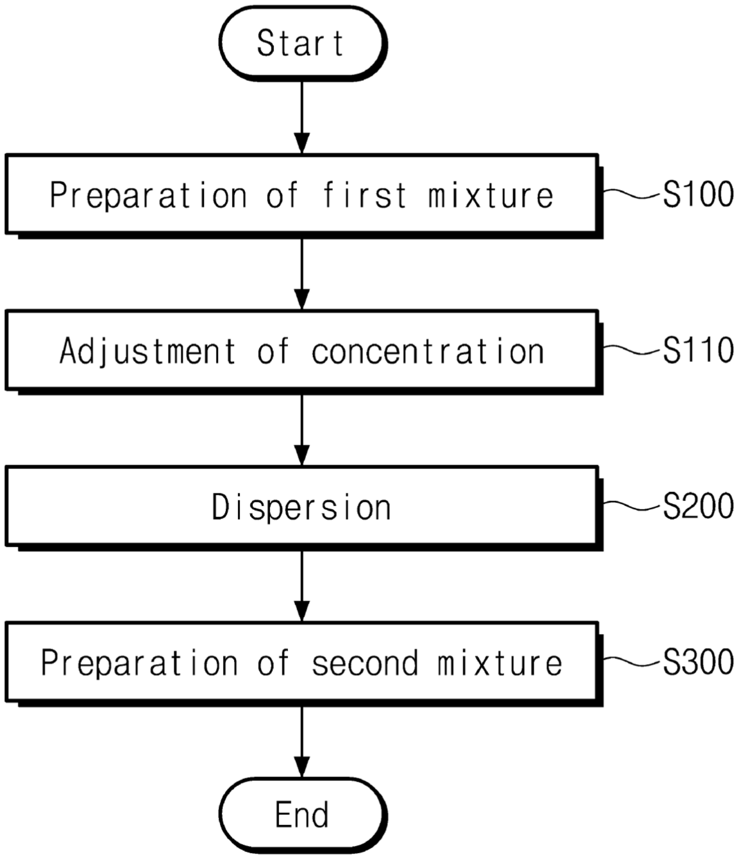
Start
Preparation of first mixture
S100
Adjustment of concentration
S110
Dispersion
S200
Preparation of second mixture
S300
End

FIG. 9

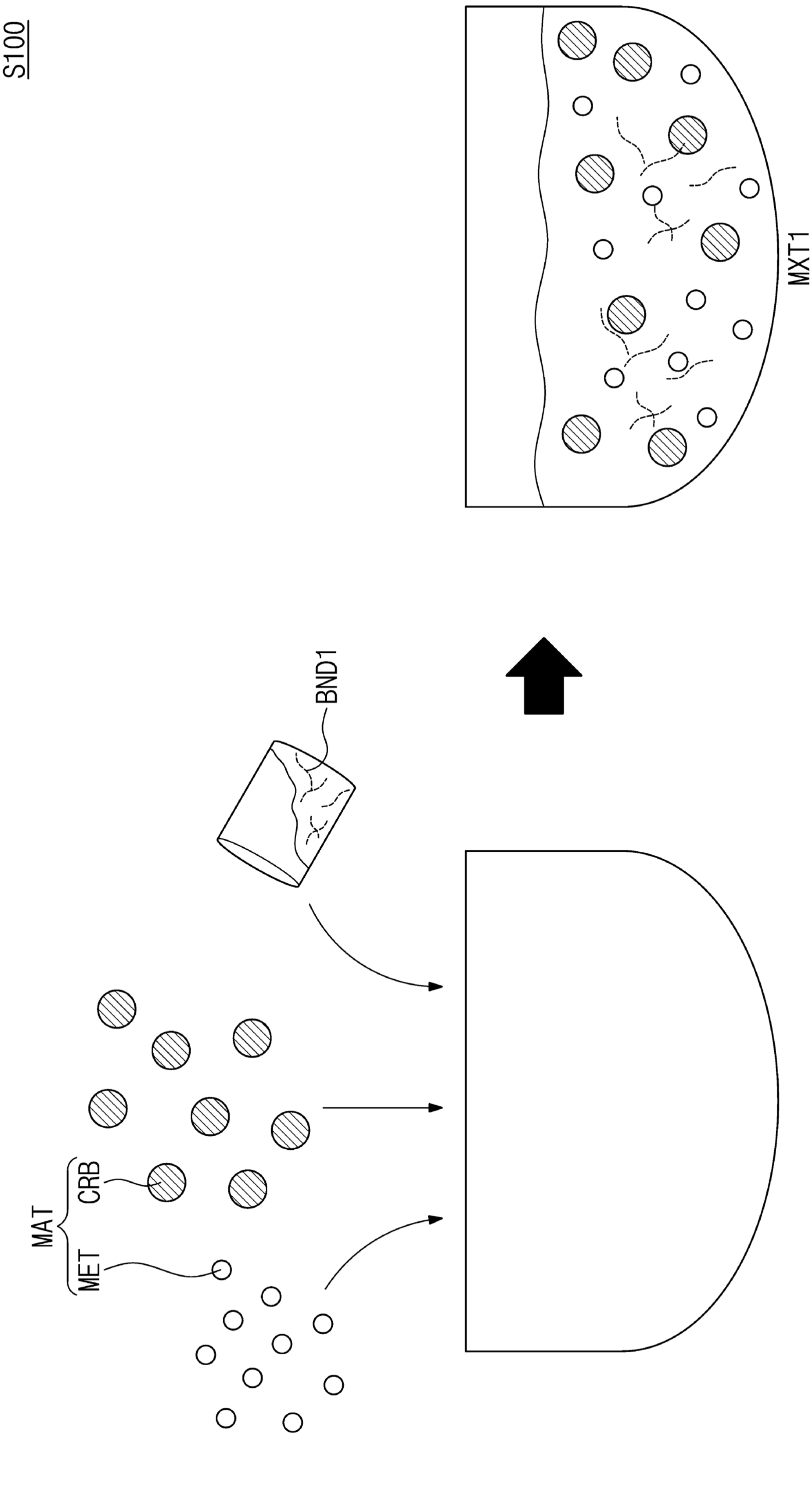

FIG. 10A

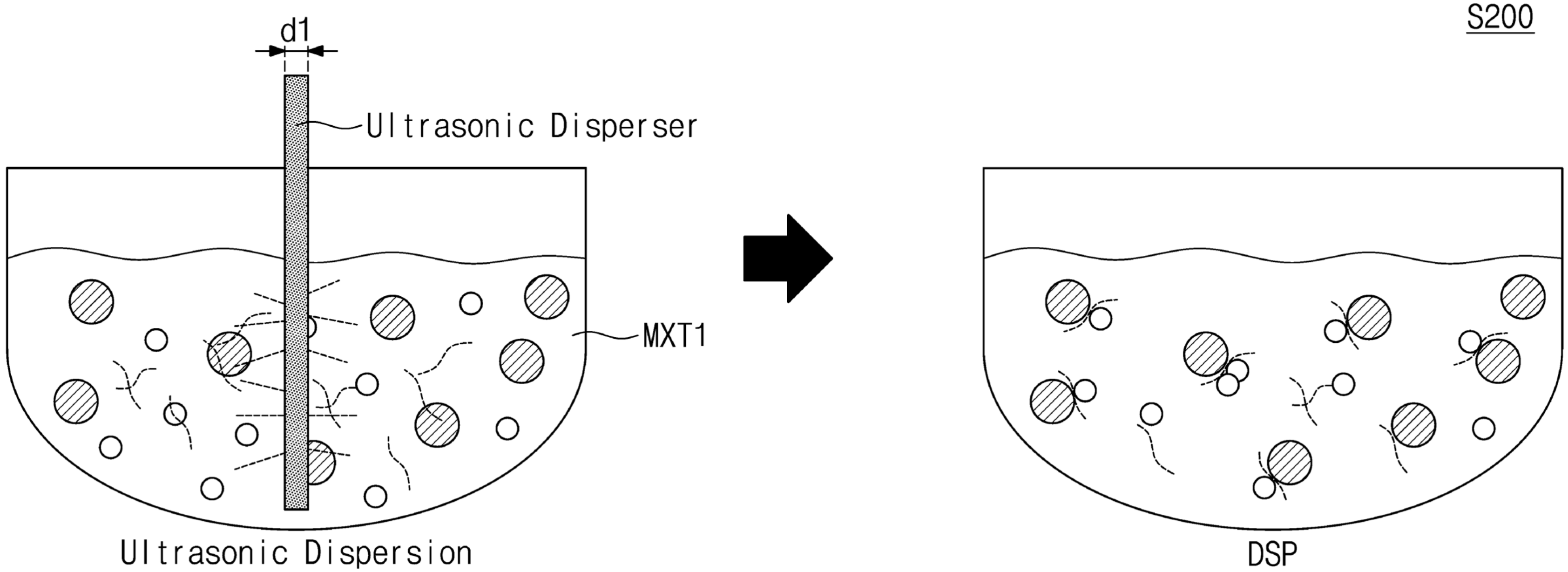
d1
Ultrasonic Disperser
MXT1
Ultrasonic Dispersion
S200
DSP

FIG. 10B

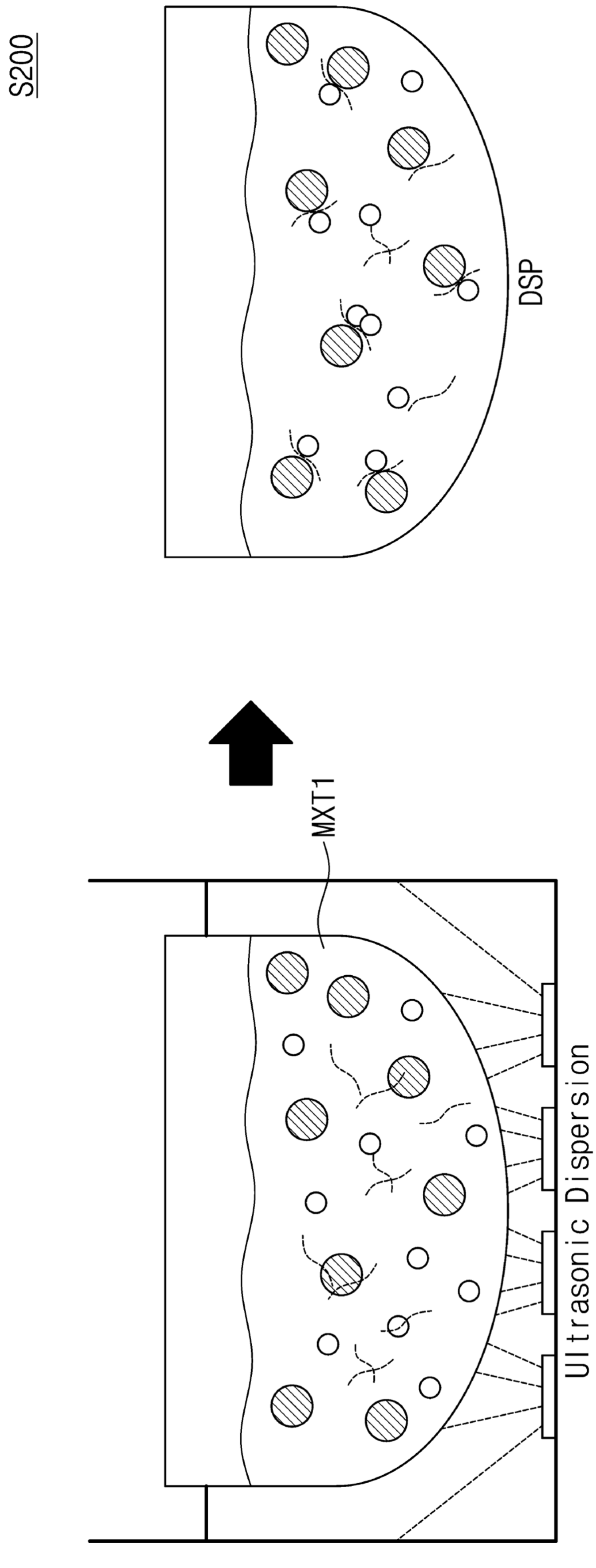

FIG. 11

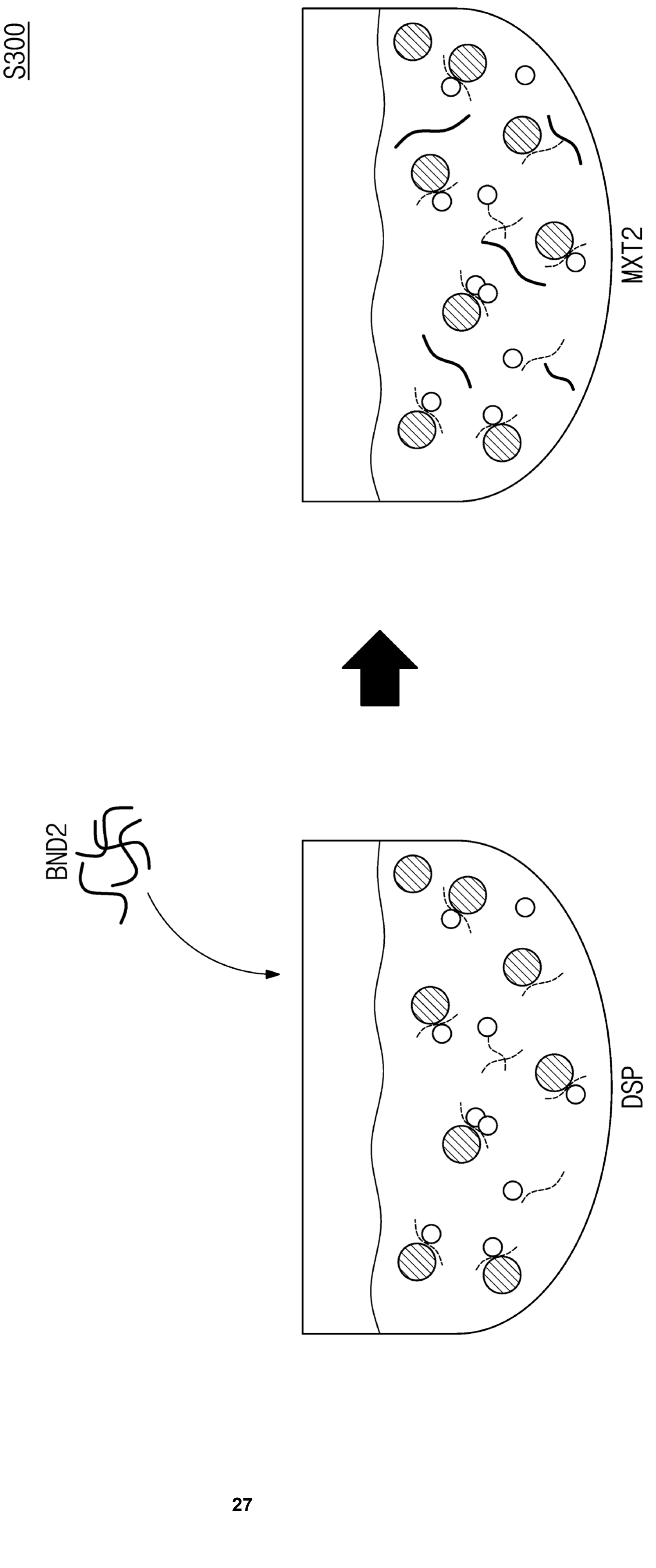

FIG. 12A

| Embodiment 1 | Embodiment 2 |
|---|---|
| 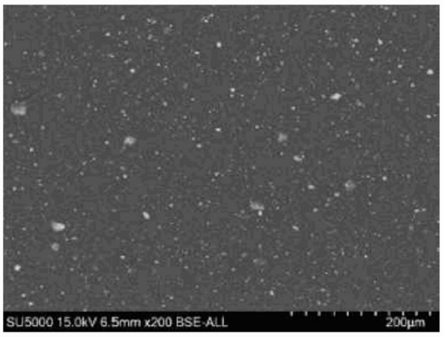 | 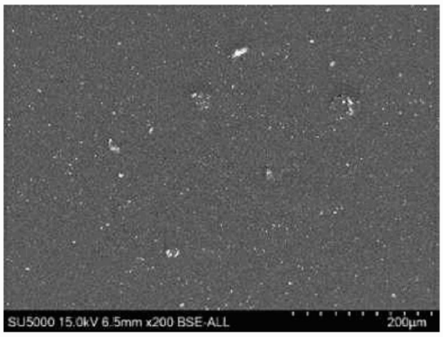 |
| Embodiment 3 | Embodiment 4 |
| 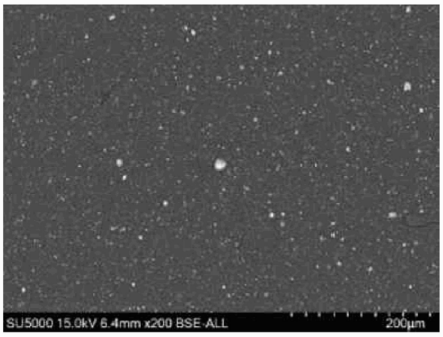 | 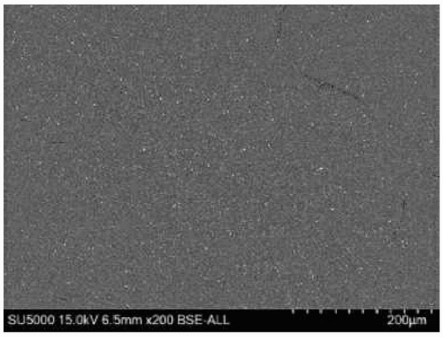 |

FIG. 12B

| Comparative 1 | |
|---|---|
| 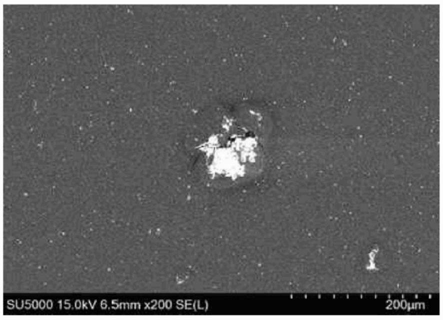 | 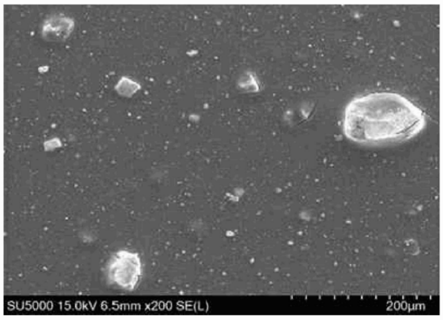 |

FIG. 13

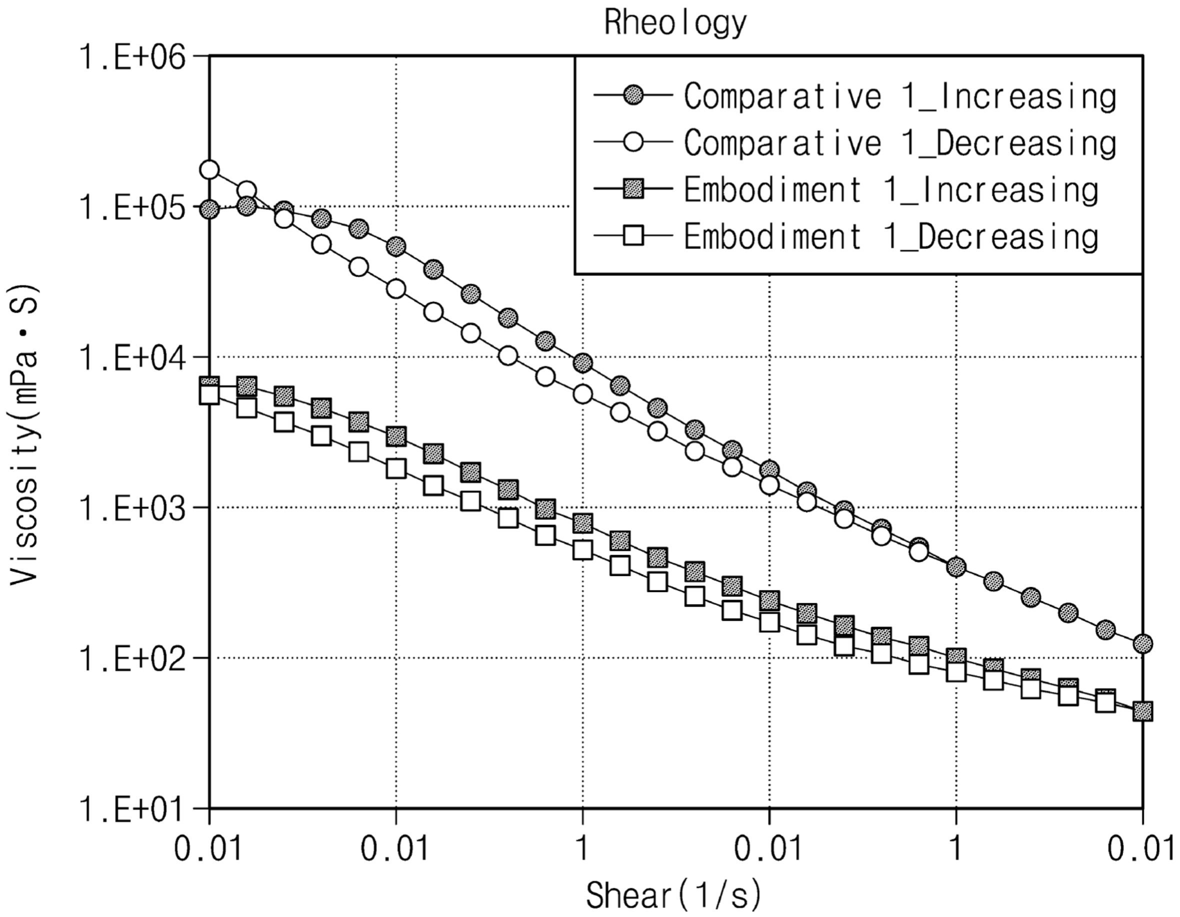
Rheology
1.E+06
1.E+05
1.E+04
1.E+03
1.E+02
1.E+01
Viscosity(mPa・S)
Comparative 1_Increasing
Comparative 1_Decreasing
Embodiment 1_Increasing
Embodiment 1_Decreasing
0.01
0.01
1
0.01
1
0.01
Shear(1/s)

Europäisches Patentamt
European Patent Office
Office européen des brevets

# EUROPEAN SEARCH REPORT

Application Number
EP 25 20 6752

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | CN 111 370 672 A (TIANJIN EV ENERGIES CO LTD) 3 July 2020 (2020-07-03)<br>* the whole document *<br>----- | 1-8,10, 12,13,15<br>9,11 | INV.<br>H01M4/04<br>H01M4/133<br>H01M4/1393<br>H01M4/1395<br>H01M4/38<br>H01M4/587<br>H01M4/62<br>H01M10/0562 |
| Y | WO 2012/086174 A1 (NEC CORP [JP]; KOSAKA MAYUMI [JP]) 28 June 2012 (2012-06-28)<br>* the whole document *<br>----- | 9,11 | |
| A | EP 4 386 881 A1 (SAMSUNG SDI CO LTD [KR]) 19 June 2024 (2024-06-19)<br>* paragraph [0118] *<br>----- | 1-15 | |
| A | US 11 289 707 B2 (SAMSUNG ELECTRONICS CO LTD [KR]; SAMSUNG SDI CO LTD [KR]) 29 March 2022 (2022-03-29)<br>* claims 6-7 *<br>----- | 1-15 | |
| A | EP 4 227 276 A1 (IDEMITSU KOSAN CO [JP]) 16 August 2023 (2023-08-16)<br>* paragraph [0180] *<br>----- | 1-15 | TECHNICAL FIELDS SEARCHED (IPC)<br>H01M |

The present search report has been drawn up for all claims

1

| Place of search | Date of completion of the search | Examiner |
|---|---|---|
| Munich | 16 February 2026 | Tylus, Urszula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 20 6752

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2026

| Patent document cited in search report | Publication date | Patent family member(s) | Publication date |
|---|---|---|---|
| CN 111370672 A | 03-07-2020 | NONE | |
| WO 2012086174 A1 | 28-06-2012 | JP 5861646 B2 | 16-02-2016 |
| | | JP WO2012086174 A1 | 22-05-2014 |
| | | WO 2012086174 A1 | 28-06-2012 |
| EP 4386881 A1 | 19-06-2024 | CN 118176597 A | 11-06-2024 |
| | | EP 4386881 A1 | 19-06-2024 |
| | | JP 2024531215 A | 29-08-2024 |
| | | KR 20230023210 A | 17-02-2023 |
| | | US 2024105943 A1 | 28-03-2024 |
| | | WO 2023018162 A1 | 16-02-2023 |
| US 11289707 B2 | 29-03-2022 | KR 20200056136 A | 22-05-2020 |
| | | US 2020152986 A1 | 14-05-2020 |
| EP 4227276 A1 | 16-08-2023 | CN 116348427 A | 27-06-2023 |
| | | EP 4227276 A1 | 16-08-2023 |
| | | JP WO2022075471 A1 | 14-04-2022 |
| | | KR 20230079084 A | 05-06-2023 |
| | | TW 202224248 A | 16-06-2022 |
| | | US 2023378525 A1 | 23-11-2023 |
| | | WO 2022075471 A1 | 14-04-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020240136556